# EUROPEAN PATENT APPLICATION

(11) **EP 4 818 012 A1**
(43) Date of publication of application: **07.10.2026**
(21) Application number: 25167546.8
(22) Date of filing: 31.03.2025
(51) Int. Cl.: B62D 55/075

(54) **SUSPENSION ARRANGEMENT; AUTOMATED STORAGE AND RETRIEVAL SYSTEM; METHOD OF PLANNING AND DEFINING AT LEAST ONE PATH OF MOTION**

(71) Applicant: Ceilix AG, 82049 Pullach i. Isartal (DE)
(72) Inventor: Siedel, Michael Torsten, 53902 Bad Münstereifel (DE)
(74) Representative: Jostarndt Patentanwalts-AG

(57) **Abstract**

The invention relates to a suspension arrangement (100) comprising at least two crawler type units (10, 10') and at least two structures (1, 1'), each extending in at least two spatial directions (x, y, x', y'), wherein each structure (1, 1') respectively comprises a plurality of profile units (1.1) extending in a first spatial direction (x, x'),
wherein each structure (1, 1') defines at least one respective structural regularity (1a) in a second spatial direction (y, y');
and wherein the at least two crawler type units (10, 10') each contain a plurality of suspension elements (13, 13a, 13b) wherein at least one first crawler type unit (10, 10') is coupled to a first structure (1, 1') and at least one second crawler type unit (10, 10') is coupled to a second structure (1, 1'), wherein the first and second crawler type units (10, 10') are linked to one another via at least one linking means (110). The invention furthermore relates to an automated storage and retrieval system for storing items, comprising the suspension arrangement.

## Description

The present invention relates to suspension arrangement and to a method and a system for storing and retrieving of a plurality of items, especially performed by an automated storage and retrieval system.

### Presentation of the state of the art

In the state of the art, suspension arrangement providing for suspension of crawler type vehicles allow for quite varied movement sequences and movement paths.

In addition, systems are known which make it possible to deliver a large number of parcels to a large number of recipients or to receive parcels from a large number of shippers.

A known storage technology is the AutoStore system, an automated storage and retrieval system (AS/RS). At its core, the technology revolves around the storage of goods in bins, which are stacked directly on top of each other and can be accessed and transported using a combination of robots and a grid system. This system contains the following technology components:
1. Bins: These are standardized containers in which goods are stored. They're stacked directly on top of each other, creating a highly dense storage configuration.
2. Robots: Robots move atop the grid and can lift and transport bins from the top of the stacks to designated locations, such as a workstation. They use a combination of lift and conveyor mechanisms.
3. Grid: The grid is a structural framework that supports both the bins and the robots. It serves as both the storage infrastructure and the road on which robots travel.
4. Workstations: These are locations on the grid's perimeter where bins are delivered by robots for human operators to either pick or replenish items.

The international patent application WO2022106598 presents a method, a depot facility and a system for handover of a plurality of parcels to a plurality of recipients and/or to receive a large number of parcels from multiple depositors as well as a logistics system with an associated ordering system which can be integrated into eProcurement applications and eCommerce applications.

The international patent application WO2023073012 presents a method and a system for handover of a plurality of parcels to a plurality of recipients and/or for receiving a plurality of parcels from a plurality of depositors. a method is provided for handover of a plurality of goods objects to a plurality of recipients, wherein the goods objects are stored and/or transported in parcels and transferred to a depot facility and then stored in the depot facility. According to the invention described in WO2023073012, in the case of at least some of the parcels, in each case at least one goods object located in the parcel is made available to a recipient for removal, so that a handover of the goods object is carried out as a handover operation, but a handover of the parcel is prevented, so that the parcel which is not handed over to the recipient of the goods object remains in the depot facility, in that the parcel is filled with at least one further goods object after the handover operation and is used for a further handover operation for the further goods object to a further recipient.

The European patent EP2042277B1 describes a gripping tool for one or more workpieces, having a frame, having a connection for a manipulator and having a plurality of gripping units, wherein the frame has more than two frame members connected together in an articulated manner and at least one controllable actuating device for the mutual adjustment thereof.

The European patent EP3803727B1 describes a method for providing process protocols for a number of physical objects (O) passing through a plurality of production/processing stations (P1... Pn) in a production/processing line, wherein machine-readable data (D) are assigned to at least one object (O), wherein the data comprise at least one identifier by means of which the relevant object can be uniquely identified, wherein the process protocol is continuously generated by continuous addition.

### Brief description of the invention

The invention is based on the task of providing a suspension arrangement for handling of at least one item, e.g. a processing tool or an object like a parcel, or a plurality of items so that the at least one item's position can be defined in favourable manner.

According to the invention, this task is solved by a suspension arrangement and by an automated storage and retrieval system being equipped with such suspension arrangement, and by a method of defining a path of motion, according to the independent claims.

### Presentation of the invention

The present application is part of an overarching concept whose goal is to perform processing operations of items as automated as possible and preferably also contactless and/or autonomously and with the smallest possible ecological footprint.

In particular, the present invention provides for a suspension arrangement comprising at least two crawler type units and at least two structures, each extending in at least two spatial directions, wherein each structure respectively comprises a plurality of profile units extending in a first spatial direction, wherein each structure defines at least one respective structural regularity in a second spatial direction; and wherein the at least two crawler type units each contain a plurality of suspension elements configured for suspending the respective crawler type unit and configured for coupling the respective crawler type unit to the respective structure by means of de-/coupling kinematics depending on a relative motion of the respective crawler type unit with respect to the structure in at least said second spatial direction, wherein the at least two crawler type units each contain at least two circumferential tracks, wherein the suspension elements are attached to the circumferential tracks at predefined longitudinal positions corresponding to the respective structural regularity, wherein the circumferential tracks respectively define a specific path of circumferential motion of the respective suspension elements, thereby providing for de-/coupling kinematics during a motion of the respective crawler type unit in said second spatial direction with the respective crawler type unit being configured to move and/or to be moved in said first spatial direction along the profile units irrespective of momentary motion in said second spatial direction, wherein a/the side (resp. front) of the respective structure from which a crawler type unit couples with the structure defines a normal vector, wherein an angle α between the at least two normal vectors of the at least two structures is between 0 and 180 degrees, especially bigger than 0 and smaller than 180 degrees, wherein at least one first crawler type unit is coupled to a first structure and at least one second crawler type unit is coupled to a second structure, wherein the first and second crawler type units are linked to one another via at least one linking means. Such suspension arrangement also provides for considerable gain in flexibility and variability, especially also in view of paths of motion.

Therein, the term "respective" designates reference to the (first or second) structure and to the crawler type units which couple with that (first or second) structure.

Further advantages, features, and advantageous refinements of the invention are derived from the dependent claims and the following description of preferred embodiments.

According to one embodiment the (at least one) linking means comprises at least one bar. Alternatively or in addition, the linking means can comprise at least one strut, beam, rod.

It should be understood that if the angle α is bigger than 90 degrees, the first and second structures are placed/arranged such that the normal/perpendicular vectors (z, z') point to one another. According to one embodiment the angle α is approximately 180 degrees (with the two normal vectors pointing in opposite directions).

It should be understood that the first normal vector of the first structure may intersect or not with a plane defined by the second structure, and vice versa. Also, the first and second normal vectors of the first and second structure can be considered normal vectors which are orthogonal to a plane defined by the respective structure. Thereby, it is not necessarily required the respective structure to strictly extend in only one spatial plane.

According to one embodiment the linking means is rigid or comprises at least one rigid linking unit or linking element like e.g. a strut or beam or rigid bar.

According to one embodiment wherein the linking means comprises at least one mechanism which is variable in length, especially a telescopic mechanism, e.g. at least one telescopic rod. Variability in length also allows for even more flexibility and variability in view of arranging the structures (e.g. allowing for great positional tolerance even in great surface installations) and in view of paths of motion.

According to one embodiment wherein the linking means is linked to at least one of the crawler type units by means of a linking joint or linking coupling respectively with at least one degree of freedom. The at least one degree of freedom can be both at least one angular/rotational degree of freedom and at least one translational degree of freedom. Such kind of tolerant joint or attachment (e.g., alternatively to attaching means like screw connections) also allows for quite variable and flexible positioning of the crawler type units, also with respect to each other.

According to one embodiment the suspension arrangement comprises a shelf removal and loading unit which is coupled with the linking means in a manner allowing for at least translational degree of freedom along the linking means.

In other words: The coupling resp. connection between the shelf removal and loading unit and the linking means preferably is configured to move or to be moved between the first and second crawler type units. Preferably, the shelf removal and loading unit comprises means for carrying items and/or means for storing and removing items in or from shelf positions.

According to one embodiment, the first and second crawler type units are linked to one another via at least two bars of the linking means, wherein the shelf removal and loading unit is supported by means of these two bars. Also, positioning of the shelf removal and loading unit along the two bars can be carried out by means of the suspension arrangement, especially by means of at least one magnetic drive or chain or belt drive.

In particular, a/the respective shelf removal and loading unit connected to the at least one or two bar(s) of the linking means can be configured to move or to be moved between the first and second crawler type units, wherein the shelf removal and loading unit comprises means for carrying items and/or means for storing and removing items in or from shelf positions.

According to one embodiment the shelf removal and loading unit can be configured to handle boxes resp. items from two sides (left and right) resp. in two directions. Thus, it can serve racks resp. shelves from two directions, without the need of turning the removal and loading unit (resp. items) along/around the vertical axis.

According to one embodiment the first structure is placed at a ceiling and the second structure is placed at a bottom, especially in a warehouse, wherein a multitude of first and second crawler type units are coupled to the respective first and second structure, wherein pairs of first and second crawler type units are linked to one another via linking means, respectively.

For example, the linking means can be attached to at least one of the crawler type units via a linking joint or linking coupling including at least one of a gimbal, hinge, link, pivot, joint.

According to one embodiment, the first spatial direction of the first structure corresponds to the first spatial direction of the second structure; and/or wherein the first structure extends in parallel with the second structure.

According to another embodiment, the first spatial direction of the first structure is orthogonal to the first spatial direction of the second structure; and/or wherein the first structure extends orthogonally to the second structure.

According to one embodiment the first and second structures each extend vertically, at least approximately plumb-vertically.

According to one embodiment the first and second structures are supported relative to one other, especially by supporting means. This also facilitates implementation of the suspension arrangement for any use or application irrespective of presence of a hall roof or floor of a machine hall or the like.

According to one embodiment the suspension arrangement comprises at least one adjusting mechanism configured for adjusting the relative distance and/or relative angular alignment/orientation of the first and second structures with respect to one another. This also facilitates implementation for any application which does not directly rely on a ground or ceiling level for supporting at least one of the structures.

According to a further aspect, the present invention provides for an automated storage and retrieval system for storing items in a storing arrangement, comprising a suspension arrangement according to one of the preceding claims, wherein the suspension arrangement comprises at least to pairs of first and second crawler type units respectively linked in pairs to one another via at least one linking means. In particular, the storing arrangement can comprise a plurality of shelves or the like, and the storing arrangement can be implemented as a component of the automated storage and retrieval system, if desired.

According to one embodiment the automated storage and retrieval system is configured for storing items in a/the storing arrangement comprising at least two rows of storage shelves with a corridor there between, wherein the automated storage and retrieval system defines a first path of motion for a first of the pairs of crawler type units and defines a second path of motion for a second of the pairs of crawler type units, wherein the automated storage and retrieval system is configured for planning/defining passing manoeuvres of the first pair of crawler type units with respect to the second pair of crawler type units, or vice versa, along first and second paths of motion within the same corridor. In other words: The linking means allow for quite stable and quiet support and alignment of the item(s), even in case the crawler type units linked in pairs are moving with respect to one another, for example for realizing a passing manoeuvre requiring an arrangement/alignment of the linking means which is not standard (especially, which is not a vertical or horizontal alignment). Also, a/the respective shelf removal and loading unit can be cardanically suspended, especially with respect to the linking means.

According to one embodiment the at least two structures of the suspension arrangement overlap and protrude the storage shelves in at least one spatial direction, and the automated storage and retrieval system is configured for planning/defining a manoeuvre of at least one pair of linked crawler type units storage shelves from a/the corridor to the protruding portion of the at least two structures outside around the storage shelf/shelves. Such an arrangement even further enhances the system's variability and flexibility, especially in view of route planning.

According to one embodiment the suspension arrangement comprises at least one shelf removal and loading unit and is configured for transferring items, wherein the automated storage and retrieval system comprises a route-planning tool which is configured to plan/define a path of motion for at least one pair of crawler type units, i.e., for at least two crawler type units which are linked to one another via linking means, wherein the suspension arrangement is configured for controlling the crawler type units to coordinate their movement in the respective structure such that the linking means (resp. the item resp. the at least one shelf removal and loading unit) is brought before a respective storage position.

It should be understood that the suspension arrangement may comprise a plurality of shelf removal and loading units, wherein each pair of crawler type units linked to one another may provide for suspension of one or at least two shelf removal and loading units, especially along the linking means.

In particular, the route-planning tool is configured for taking into account at least momentary positions and paths of motion of at least one further crawler type unit coupled to one of the at least two structures, wherein the crawler type units can move omnidirectionally along the respective structure to which they are coupled, especially taking into account other crawler type units that are connected to another crawler type unit via at least one bar, especially allowing for passing manoeuvres in corridors between the storage shelves, thus increasing the number of transportations.

For example, such automated storage and retrieval system comprises at least one vertical gardening application.

In the following, further examples for implementations of technical features of the suspension arrangement are described, wherein it is i.a. generally referred to vehicles, which vehicles can be embodied as e.g. crawler type units. In particular, embodiments are also described in more detail by referring to an automated storage and retrieval system comprising a/the suspension arrangement according to the present disclosure.

For example, a/the automated storage and retrieval system according to the present disclosure can also be configured for the storing of items, e.g. of goods objects in containers in a storing arrangement, wherein a/the suspension arrangement implemented for e.g. lifting, transferring and lowering the containers can also be arranged oriented to at least one transfer area for the items, e.g. arranged parallel to at least one transfer area parallel to at least one transfer area for the containers, wherein the suspension arrangement can comprise (twice) at least one crawler type vehicle/unit and a structure extending in at least two spatial directions (e.g. a first crawler type unit and a first structure, and/or a second crawler type unit and a second structure), wherein the structure comprises a plurality of profile units extending in a first spatial direction, wherein the structure defines in at least a part of its surface at least one structural regularity in a second spatial direction; and wherein the at least one (crawler type) vehicle can comprise a plurality of suspension elements configured for suspending the at least one vehicle, wherein the at least one vehicle can comprise a gripping unit, wherein the gripping unit can be configured to connect to at least one item; and wherein the suspension arrangement can be configured for active motion of the vehicle in said first spatial direction and/or said second spatial direction.

In other words: The present invention is based on the concept of a suspension arrangement comprising at least two structures and at least two crawler type units linked to one another; in addition, the suspension arrangement may comprise at least one further crawler type vehicle or crawler type unit which is not necessarily linked to another further crawler type vehicle/unit, and which may also move at/on the structure.

For example, the suspension arrangement can be configured for lifting, transferring and lowering containers and can be arranged oriented to at least one transfer area, i.e., the suspension arrangement can also face an area, where a transfer of items between a/the storing arrangement and the gripping units of the vehicles movable along the suspended structure can occur. E.g., the storing arrangement and the suspension arrangement are separated from each other, especially allowing a free and uninterrupted movement of the vehicles wherein a stop of the vehicles only occurs close to items, wherein the only contact between the vehicles and the items and/or the storing arrangement may occur through the gripping units of the vehicles.

The crawler type vehicle can comprise at least one motor/actuator for actively driving the crawler type vehicle along the structure.

The crawler type vehicle resp. the crawler type unit resp. the pair of crawler type units linked to one another follows an intended direction resp. an intended path of motion, especially in conjunction with appropriate sensor-actor-arrangements.

The suspension arrangement can be configured for active motion of the vehicle / the vehicles, wherein the vehicle/s can move on its/their own. According to the present disclosure, "actively moving" designates a motion of the vehicle (resp. unit) in relation to the structure actuated preferably by an electric motor of the vehicle connected to a drive unit such that the vehicle can move on its own inside the structure when the motor is activated. The choice of an appropriate motor can be carried out by the person skilled in the art in regard to existing motors and motor arrangements depending on the respective application / task / size of the respective vehicle, e.g., crawler type vehicle.

In the following, some features of advantageously equipped automated storage and retrieval systems are described/listed.

Gripping units, often referred to as end effectors or end-of-arm tooling (EOAT) in the context of logistics, but also known from automation and robotics, are devices designed to interact with items, especially different items. Their design is influenced by the size, shape, weight, surface and material properties of the items to be handled. Examples of gripping units which can be tailored to handle items as described in the current application text are:
1. Clamps & Grippers:
   * Pneumatic Grippers: Use compressed air to actuate jaws or fingers. Common in pick- and-place operations.
   * Mechanical Grippers: Operate through manual, electric, or other mechanical means.
   * Magnetic Grippers: Suitable for ferrous materials. Ideal for sheet metal, heavy blocks, or slabs.
   * Vacuum Grippers: Use suction to grip. Common for flat objects like sheets, boxes, and panels.
2. Spreaders:
   * Container Spreaders: Designed especially for lifting containers. They lock especially onto the corners (corner castings) of the containers.
   * Bulk Handling Spreaders: For bulk goods like coal, grain, or ore. Often have a scooping or bucket-like design.
3. Forklifts & Fork Attachments:
   * Standard Forks: For palletized goods.
   * Telescopic Forks: Extendable forks for double-deep stacking or varied load depths.
   * Clamp Attachments: For gripping bales, drums, or rolls.
4. Hook & Rope Systems:
   * Hooks: Standard lifting hooks for general purpose use.
   * Slings: Flexible lifting devices. Types include chain, wire, and synthetic slings. For irregularly shaped or delicate items.
   * Grabs & Grapples: Multi-fingered, often hydraulic, for bulk materials like logs, scrap, or waste.
5. Bag & Sack Handling:
   * Bag Grippers: Specialized grippers for handling bags of materials (e.g., grains, powders). Can be vacuum-based or mechanically actuated.
6. Specialized Grippers:
   * Adaptive Grippers: Often found in robotics, they adapt to various shapes and sizes.
   * Soft Grippers: Made of soft, adaptable materials, suitable for delicate items like fruits or irregularly shaped objects.
   * Rotary Grippers: Allow rotation of the object, useful for assembly or inspection processes.

Gripping units according to the present disclosure may include gripping elements, especially as mentioned above and/or described in other parts of this application text as well potentially also an elongator, especially an arm, preferably an extendable/expandable robot arm.

When selecting a gripping unit, it's important to consider factors like the object's weight, fragility, shape, and material type. Proper selection and implementation can greatly enhance operational efficiency and safety.

To optimize the handling of the items it is described to analyze as many properties of the items as relevant for their handling in the automated storage and retrieval system and preferably also for a handling of the items after they are retrieved. The current application text describes certain options for handling the items after their retrieval from the automated storage and retrieval system including by at least one logistic process of a logistics system, preferably by a handling of the items and/or of goods objects as parcels.

For analyzing and/or identifying the objects, several detection and identification technologies known from the state of the art can be utilized, e.g. object identification features as sensors for QR code reading or sensors for RFID tag reading.

For the automated storage and retrieval of many items it is appropriate to assume, that the items are durable. However, the described examples are not limited to embodiments where the items remain stable and/or unchanged over time. It is useful to monitor a status of the items, e.g., by an integration of inspection equipment.

It is further useful to integrate inspection equipment, especially for monitoring, if the actual state of the items and/or their status, especially storage or retrieval status has changed. Especially if a risk that an item deteriorates, it is useful to advance a retrieval of this item ,

Examples of the inspection equipment are:
- Optical-, thermal cameras
- Sound level sensors
- 3D Optical scanners
- Gas sensors
- Particle sensors,
- Temp sensors
- Humidity sensors.

The automated storage and retrieval system preferably is designed with regard of the physical or rather physical properties of the items to be stored and retrieved and adapted to available space.

Whereas warehouses according to the state-of-the-art handle bins filed with good objects by storing and retrieving the bins, the present invention is not limited to a handling of conventional bins. However, conventional bins as described in the state of the art as for example the AutoStore bins or any other stackable bin as well as other bins, e.g., also nesting bins can be handled as items by automated storage and retrieval systems described in the current patent application.

The present invention provides for means and methods for implementing or integrating a suspension arrangement comprising at least one (crawler type) vehicle/unit and a structure extending in at least two spatial directions, wherein the structure comprises a plurality of profile units (especially rails) extending (preferably continuously, especially without any structural discontinuity) in a first spatial direction, wherein the structure defines at least one structural regularity in a second spatial direction (thereby providing a one-dimensional raster with discrete coupling points distributed in at least one equidistant regularity in said second spatial direction).

The vehicle is especially a crawler type vehicle resp. crawler type unit that comprises a plurality of suspension elements configured for suspending the vehicle and configured for coupling the crawler type vehicle to the structure by means of de-/coupling kinematics depending on a relative motion of the vehicle with respect to the structure in at least said second spatial direction, wherein the (crawler type) vehicle comprises means for providing for de-/coupling kinematics during a motion of the crawler type vehicle in said second spatial direction, especially with the crawler type vehicle being configured to be moved in said first spatial direction along the profile units irrespective of momentary motion in said second spatial direction.

All vehicles according to the present description can be designed as any of the crawler type vehicles described in this patent application text.

According to the present disclosure, when it is referred to "structure", a structure that predominantly extends along a Vertical plane or horizontal plane or even along an inclined plane (or the like) is designated. The present invention can applied for vehicles resp. units being arranged at resp. traveling along a structure, and in addition, the present invention also allows for any motion along any structure with alternative orientation and/or arrangement. Thus, referring to a "structure" includes reference to any other "structure" comprising the features presently described allowing for coupling with/to the vehicle/unit according to the present disclosure and corresponding de-/coupling kinematics.

According to the present disclosure, when it is referred to "profile units" or "profiles" or "T-profiles", the disclosure also generally refers to different kinds of profiles like e.g. I-profiles (resp. double-T beam or double-T profile) or L-profiles which may provide for advantageous/favorable arrangements in individual applications.

The profile units respectively comprise at least one tread, wherein each suspension element comprises at least one element of motion (for gliding or rolling, especially at least one wheel) arranged and configured for actively moving (especially gliding or rolling) the vehicle in said first spatial direction. Preferably, each suspension element comprises at least two elements of motion, e.g., a main wheel and a side wheel (side friction wheel of a roller coaster) clamping the profile unit from at least two sides.

According to the present disclosure, when it is referred to "vehicle", the disclosure generally refers to vehicles resp. units, capable of moving along the suspension structure. However, vehicles or vehicles connectable to the relative spatial arrangement or traveling motion are preferred. The vehicle comprises one or more load attachment points configured for connecting to gripping unit to interact with one or more item.

The vehicle can comprise at least one motor/actuator for actively driving the vehicle along the structure.

The vehicle follows an intended direction resp. an intended path of motion, especially in conjunction with appropriate sensor-actor-arrangements.

According to the present disclosure, when it is referred to "at least one vehicle", this term illustrates the fact that the manner of implementing the present invention does not necessarily depend on the fact that at least two vehicles/units are linked in pairs to one another. Rather, providing for energy or couplings or joints can also be implemented by reference to one single vehicle, especially since the vehicles/units can be configured identically, congruently. Same applies for the term "at least one structure". In other words: When pointing out features of a (single) vehicle/unit or structure, it can also be referred to that (first or second) vehicle/unit which couples with that (first or second) structure. Also, e.g. in context with a route planning tool, implementation can be such that only one of two units/vehicles are addressed, i.e., synchronous motion of several crawler type units/vehicles is not necessarily required; even, one of two crawler type units/vehicles linked to one another may move, and the other may remain/reside at a fixed position. The vehicles/units are independently movable, even if linked to one another. Not least, a respective vehicle/unit may pass from one (first) to another (second or further) structure, thus, referring to "at least one structure" involves the inventive concept of allowing for motions (of the same crawler type unit) also along several structures.

The suspension structure can comprise at least one energy charging point/position/area, wherein the suspension structure is configured for charging/providing the at least one vehicle (resp. the at least two crawler type units) with energy when being arranged in/at said energy charging point/position/area. For example, the charging area covers at least one charging section or the whole structure.

For example, the present invention is implemented in context with a suspension arrangement that comprises (twice) at least one (crawler type) vehicle/unit and a structure extending in at least two spatial directions, wherein the structure comprises a plurality of profile units extending in a first spatial direction, wherein the structure defines in at least a part of its surface at least one structural regularity in a second spatial direction; and wherein the at structure comprises a plurality of suspension elements configured for suspending the at least vehicle, wherein the at least one vehicle comprises a gripping unit, wherein the gripping unit is configured to connect to at least one container; and wherein the suspension arrangement is configured for active motion of the vehicle in said first spatial direction and/or said second spatial direction for lifting, transferring and lowering the containers parallel to at least one transfer area for the containers in an appropriate distance from the adjacent side of stored items the items can be flexibly stored and retrieved.

It is especially useful to use at least two vehicles which can operate independently, especially move independently, along at least two structures.

Even when two or more vehicles can operate independently implementations are possible and useful in which at least two vehicles, respectively at least two vehicles selected from a plurality of vehicles can be coordinated, especially by coordinating the movements of their gripping unit units for coordinated lifting and/or moving of a preferably heavier item.

A planar surface formed and defined by the at least two spatial directions of the structure is brought in a distance from items to be lifted and/or transported by the a gripping unit of at least one of the one vehicles.

An example of the automated storage and retrieval system is described, wherein the at least one vehicle is a crawler type vehicle/unit, wherein the crawler type vehicle comprises means for providing for de-/coupling kinematics during a motion of the crawler type vehicle in said second spatial direction, especially with the crawler type vehicle being configured to be moved in said first spatial direction along the profile units irrespective of momentary motion in said second spatial direction enables independent movements of the vehicles with high acceleration, high speed and high deceleration.

Though the items mentioned in this can application can have different shapes, sizes and further properties it is especially useful to handle the items as parcels in a logistics system. This can especially refer to items which are goods objects as to containers, which contain at least one goods object. In the latter case, the containers and/or the goods objects can be items described in this application text too.

As part of examples with a handling of the items (especially goods objects or containers containing at least one goods object), methods, storage facilities and logistics systems for handling of a plurality of parcels to multiple recipients and/or for receiving parcels from multiple depositors are disclosed.

In this application text, the term logistics system means a system that can perform at least one of the following processing operations on items, in particular parcels:
- Handling, in particular depositing and/or handing out
- Transport
- Sorting
- Storage
- Commissioning.

According to one embodiment of the automated storage and retrieval system , the vehicle or plurality of vehicles comprise/comprises at least two circumferential tracks, wherein the suspension elements are attached to the circumferential tracks at predefined longitudinal positions corresponding to the structural regularity, wherein the circumferential tracks respectively define a specific path of circumferential motion of the respective suspension elements, thereby providing for de-/coupling kinematics during a motion of the vehicle in said second spatial direction (y).

According to the present disclosure, when it is referred to "circumferential track", the disclosure also generally refers to closed loop guidings and lines and predefined contours along which the suspension elements are guided and/or driven, e.g., chains or any such traction means providing for a closed loop.

The shape/contour of respective circumferential tracks can be individual, i.e., the skilled person can decide e.g., about a certain degree (radius) of curvature in specific sections of the respective circumferential track. For example, each track comprises at least three different guide/rail sections, namely: a first (linear) section in which each suspension element is engaged with the profile, wherein the suspension element performs a linear motion; and at least one second (curved) section in which each suspension element performs a de-/coupling motion (wherein each track may comprise two second sections being arranged oppositely); and a third (linear) section in which the suspension elements are returned to couple again with the profile (for continuous, circumferential motion and engagement process). Thereby, first and second tracks may define the trajectory of the respective free ends of the suspension elements especially comprising at least one element of motion, e.g., a wheel, being attached to the respective suspension element by any appropriate means (e.g. by a gliding/rolling contour, a chain drive, a timing belt, or any likewise mechanism or mechanical feature) which is configured for predefining a specific contour and for guiding the free ends resp. the rollers to follow that contour of the tracks.

The circumferential tracks respectively define a specific path of circumferential motion of the respective suspension elements (resp. of coupling means of the suspension elements, especially of a free end of the respective suspension element). Such configuration not only facilitates implementation in context with complex structures or in context with a plurality of vehicles to be used at the same time, but also considerably increases variability as to positioning. Thereby, the present invention also provides for practical scalability (both with respect to the structure and with respect to the number of vehicles), even in three-dimensional extension, if desired.

The vehicle can comprise two or more kinds/types of suspension elements, wherein the different types of suspension elements are de-/coupled according to individual kinematics (especially in opposite directions/sides at the profile units, especially both in and opposite to the second spatial direction resp. travel direction of the vehicle), wherein a first subset of the suspension elements are attached to a first pair of circumferential tracks (resp. a subset of the first subset, momentary) and at least one further subset of the suspension elements are attached to a second pair of circumferential tracks (resp. a subset of the second subset, momentary) respectively at predefined first and second (further) longitudinal positions respectively corresponding to the structural regularity (resp. to the distance of the profile units defined by said structural regularity), wherein the first and second pairs of circumferential tracks provide for individual kinematics for the first and second subsets of suspension elements, especially such that the vehicle can be secured with respect to opposite sides/directions (of the second spatial direction) at the structure resp. at the profile units.

The vehicle can be configured for enabling at least one closed loop trajectory of respective suspension elements along corresponding circumferential tracks, especially configured for enabling at least two closed loop trajectories of at least two subsets of respective suspension elements.

The circumferential tracks can be shaped in such a manner that the respective suspension elements are de-/coupled from/into the structure when passing a curved section of the tracks.

For example, a subset of the suspension elements can be attached to one of the circumferential tracks (resp. a subset of the first subset, momentary) and at least one further subset of the suspension elements are attached to a further one of the circumferential tracks (resp. a subset of the second subset, momentary) respectively at predefined first and second (further) longitudinal positions respectively corresponding to the structural regularity, in particular with each suspension element being guided by a pair of circumferential tracks.

The suspension elements can be fixedly attached/coupled by means of a first pulley to/with a/the first circumferential track and are guided within a/the second circumferential track by means of a second pulley respectively, wherein the first and second pulley preferably are arranged at a lever arm of the respective suspension element. For example, each suspension element can comprise a first pulley and a second pulley arranged in longitudinal distance with respect to the first pulley at a lever arm of the respective suspension element, wherein the suspension element is coupled to a/the first and a/the second circumferential tracks via the first and second pulleys. Preferably, each suspension element comprises at least one wheel to roll on a tread of the profile unit a further wheel to roll on a side of the tread of the profile unit to reduce potential slip.

A respective subset of said suspension elements can be connected to each other by means of longitudinal connecting elements, especially by chain elements, thereby forming a closed loop of interrelated suspension elements distanced to each other in a/the predefined structural regularity.

The respective circumferential track e.g., comprises a chain or is provided/defined by a chain forming a closed loop of interrelated chain elements.

The vehicle, especially if designed as crawler type vehicle can be configured for lifting a/the respective suspension elements out of the structure in an unloaded state, especially such that both de-/coupling kinematics for a subset of momentarily unloaded suspension elements and suspension of the vehicle by a subset of momentarily loaded suspension elements can be ensured.

Each suspension element can be guided by a pair of circumferential tracks, wherein the vehicle comprises at least three pairs of circumferential tracks each guiding a subset of the suspension elements, wherein said de-/coupling kinematics are predefined by said three pairs of circumferential tracks in such a manner that respective suspension elements (resp. a subset of the respective subset, momentary) simultaneously de-/couple both at a first side (resp. first longitudinal position) of a respective profile unit and at a second side (resp. second longitudinal position) of a respective profile unit, especially such that the vehicle is secured with respect to opposite sides/directions (of the second spatial direction) at the structure, especially with all suspension elements being guided in same circumferential direction, especially with all circumferential tracks being arranged in parallel to each other.

The vehicle comprises at least one drive interacting with (resp. driving) at least one of the circumferential tracks, wherein the suspension system is configured for a predefinable driven motion of the vehicle at least in said second spatial direction (especially back and forth).

The vehicle can also comprise an energy storage unit providing energy to a/the at least one drive, preferably all drives, of the vehicle, especially to a/the at least one drive interacting with (resp. driving) at least one of the circumferential tracks.

According to the present disclosure, the term "drive unit" especially refers to a unit accommodating kinematics allowing for traveling motion of the vehicle, as described above.

The shape or dimension of the at least one first drive unit (and also of the circumferential tracks) can be defined individually according to specific applications. E.g., the cross-section geometry of the at least one first drive unit is in the shape of a racecourse (parallel longitudinal sections and opposite semicircle sections). But, alternatively, the cross-section geometry can also be circular or elliptical for example.

According to one embodiment of the automated storage and retrieval system, the structure comprises power rails integrated into the profile units and the vehicle or the plurality of vehicles comprises means for electrically connecting to the power rails.

For example, at least two of the suspension elements each comprise at least two electrically connected electrical contacts configured for establishing an electrical connection between the structure and the vehicle, wherein the first electrical contact of a first suspension element for establishing an electrical connection is electrically connected to a first pole/phase of a power bus in the structure when the vehicle is coupled to the structure via the first suspension element and the first electrical contact of a second suspension element for establishing an electrical connection is electrically connected to a second pole/phase of the power bus in the structure when the vehicle is coupled to the structure via the second suspension element, and wherein the second electrical contacts of the suspension elements are each connected to a respective pole/phase of an internal bus of the vehicle at least when the vehicle is coupled to the structure via the suspension elements for establishing an electrical connection.

According to the present disclosure, "electrical contact" designates a connection mechanism that enables the flow of electrical current between two or more conductive elements. The primary objective of an electrical contact is to establish a reliable and efficient means of transferring electrical signals or power. The electrical contacts must possess certain key properties, such as high electrical conductivity, mechanical robustness, corrosion resistance, and thermal stability. Examples of suitable materials for electrical contacts may include copper, copper alloys, or noble metals like gold, silver, or platinum, as well as various alloys and composite materials. It is imperative that the connection between the electrical contact and the pole/phase in the structure be established in a reversible manner, allowing for repeated engagement and disengagement without compromising its performance. Examples of reversible electrical contact mechanisms include sliding contacts, where two surfaces slide against each other to establish and break the connection, or roller contacts, where rotating elements facilitate electrical contact.

The power rails can be integrated into the profiles of the structure, i.e., along the I-, L-, or T-profiles on one edge or side, preferably above the tread surface of the profile.

The vehicle can e.g., comprise electronics connected to the internal bus for supplying the vehicle with power. These electronics can comprise but are not limited to communication modules for wireless or wired data exchange (vehicle-to-vehicle, vehicle-to-infrastructure, vehicle-to-mobile devices, etc.), a/the central control unit, sensors (proximity sensors, accelerometers, LiDAR, radar, etc.), a power management system (power converters (AC/DC, DC/DC), battery management, voltage regulators, ESD protection), motors, etc. The vehicle can also comprise an energy storage, such as a battery pack and/or super capacitors and/or the vehicle can comprise electrical connection means for connecting to the gripping unit, wherein the gripping unit can be supplied with power via the electrical connection means.

For example, when the vehicle is moving in the second spatial direction, i.e., when suspension elements for establishing an electrical connection are coupled into the structure, the second sliders can be connected to the conducting rail such that the first slider has a defined potential before the first sliders are in proximity or connected to the power rail in the structure and when the suspension elements are decoupled from the structure, the first sliders are disconnected from the power rail before the second sliders are disconnected from the conducting rail. This measure serves to avoid spark creation, especially in the moment the suspension elements are brought into contact with the structure, by pulling the floating potential of the electrical contact to the potential of the power rail before. In an alternative example, when the suspension elements are coupled to the structure, the first sliders are connected to the power rail in the structure before the second sliders are in proximity or connected to the conducting rail in the vehicle and when the suspension elements are decoupled from the structure, the second sliders are disconnected from the conducting rails before the first sliders are disconnected from the conducting rail. This can reduce wear on the electric rails in the structure and shifts potential wear into the vehicle sliding contacts which are considered to be simpler to restore by maintenance actions.

For example, at least two conducting rails are placed in parallel at least to sections of the described circumferential tracks (see above), wherein at least two suspension elements for establishing an electrical connection comprise means for dis-/connecting from/to the conducting rails, when the suspension elements are de-/coupled from/into the structure. The conducting rails can be integrated into the vehicle particularly easily, when the first drive unit has a race-course shape, wherein the suspension elements that are currently coupled into the structure are following a straight or linear section. Arranging two conducting rails in parallel can mean to place them on opposite sides at the same height of the drive unit, on one side at different heights with respect to the plane in which the structure is extending, or on opposite sides at different heights. If only one first drive unit is used, it has proven beneficial to place the conducting rails on opposite sides. However, for scalability and easier integration process of more drive units, it can be beneficial to arrange two conducting rails at different heights on one side, because another drive unit, also comprising conducting rails in the same fashion could be integrated into the first drive unit in a mirror-inverted manner.

The suspension elements configured for establishing an electrical connection with the structure can exemplarily be distributed along the at least one first drive unit such that, when the vehicle is moving along the structure, a suspension element for the electrical connection of a respective pole/phase is coupled into the structure before an otherwise last/only suspension element connected to the respective pole/phase is decoupled from the structure . This helps to ensure an uninterrupted connection with the respective pole/phase while moving the vehicle on the structure. For example, every suspension element is configured for establishing an electrical connection with the structure. This can be beneficial for applications where a particularly high amount of power is to be transferred via the suspension elements because the current can be distributed over many suspension elements, reducing heat creation and wear of the components. Additionally, with this redundant configuration, a disconnect of single suspension elements would not result in a complete disconnection of the full vehicle. It is preferred that the whole structure comprises poles/phases of the power bus. To ensure that at least two suspension elements are connected to at least one respective pole/phase of the power bus at all times, the vehicle and structure have to be coordinated such that there is always one suspension element of a corresponding pole/phase connecting to the bus in the structure by coupling the suspension element into the structure before the otherwise last suspension element that is currently connected to the same pole/phase in the structure gets disconnected from the bus from a decoupling process of the suspension element.

According to one embodiment of the automated storage and retrieval system, the vehicle or the plurality of vehicles comprise/comprises at least two independently controllable motors, wherein at least one motor is configured for driving a motion in the first spatial direction (x) and at least one further motor is configured for driving a motion in the second spatial direction (y).

Each power unit, drive, motor and/or actuator of the vehicle can be coupled to a control unit of the vehicle.

The vehicle may comprise two or three drive units which can be arranged in predefined lateral distance to each other (e.g. defined/connected via cross-beams or the like), and each drive unit may comprise at least one drive/motor for actively driving the suspension elements along the circumferential tracks or the vehicle in the second spatial direction, and these drives/motors can be controlled depending on each other, e.g. via the speed of rotation. Thus, a traveling direction can be controlled in combination with actively driven wheels of the suspension elements being driven along the profile rails of the structure. The suspension elements can e.g., be connected via a spur gear to a motor. The wheels of the suspension elements can also or alternatively comprise gear grooves to interact with a corresponding contour integrated into a "bottom" side of the profile unit, wherein "bottom" indicates the side of the profile unit facing the vehicle.

The vehicle can alternatively or in addition comprise at least one second kind of a drive unit configured for enabling locomotion of the vehicle in the first spatial direction. The first drive units of the vehicle can be scaled up in number, e.g., the vehicle comprises three first drive units each being based on the same kinematic concept, but at least one of these drive units providing for mirror-inverted type/manner of de-/coupling kinematics. The second kind of drive unit can, e.g., comprise a holonomic wheel, or an elongated gearing wheel, that is able to be moved in the second spatial direction while moving the vehicle in the first spatial direction when driven.

According to an example at least one holonomic wheel is used. A holonomic wheel is a wheel whose wheel tread consists of rollers whose axes of rotation are at an angle to the axis of rotation of the main wheel. The absolute angle between the axes can for example be any angle between 5 and 90 degrees, especially 45 degrees. This angle has to be regarded when controlling the at least two motors, since the movement of the first drive units and the second drive unit are not independent in the case that the angle of the rollers to the wheel is different than 90 degrees. An angle smaller than 90 degrees can result in advantageous configurations regarding the traction of the holonomic wheel with the profiles of the structure. In case the angle is smaller it is possible to place more rollers with the same diameter around the wheel, which enhances traction transmission and can compensate for gaps in the traction transmission of a single omniwheel. The holonomic wheel can e.g., be disc shaped and comprise a plurality of equally distributed rollers around its circumference, such that it allows for traction control in the first spatial direction and is not affected by a motion in the second spatial direction.

According to one example of the automated storage and retrieval system, the vehicle or the plurality of vehicles comprise/s a holonomic wheelset comprising gear grooves for form fit coupling, especially with a bottom side of the profile units. For this, the bottom side of the profile units needs to comprise corresponding teeth to form fit with the gear grooves of the holonomic wheelset.

The gear grooves are distributed equidistantly along the circumference of each holonomic wheel of the wheelset. The holonomic wheel set comprises at least two coaxially arranged holonomic wheels. The coaxially arranged holonomic wheels are e.g., disc shaped and have a thickness that is half the width of the profiles of the structure, such that there is room for at least two holonomic wheels of the holonomic wheelset to interact with one profile (rail) of the structure at all times. Each of the coaxially arranged holonomic wheels can have a predefined offset in the azimuthal direction in respect to their adjacent holonomic wheels. If one holonomic wheel comprises n rollers, that are equally distributed around the circumference of the wheel, each wheel is offset by 180/n degrees with respect to its neighbors. This way, it can be ensured that there is always at least one wheel of the wheelset in contact with the profile of the structure such that slip is prevented.

According to one example of the automated storage and retrieval system, the vehicle or plurality of vehicles comprises/comprise a return mechanism. E.g., a holonomic wheelset is connected to a return mechanism that applies a force to the holonomic wheel(s) pressing it/them against the structure. This configuration enhances traction of the holonomic wheel on the profiles (rails) of the structure additionally ensures form fit in the case that the holonomic wheels comprise gear grooves and the structure comprises corresponding teeth. However, it is also possible to connect a return mechanism to parts of the suspension elements to also enhance force coupling.

Alternatively, or in addition, the vehicle or the plurality of vehicles comprises counter wheels. The counter wheels can also be connected to the return mechanism. For example, the counter wheels are connected to a further first drive unit comprising two circumferential tracks (see above), wherein the counter wheels comprise two pulleys at a lever arm, each of the pulley being connected to an individual track, such that the counter wheels are guided along the circumferential tracks when the vehicle is moving in the second spatial direction. The counter wheels can also comprise gear grooves to mesh with gear teeth in the structure. The counter wheels press against the profile units from the side of the vehicle, enhancing force fit/form fit coupling.

According to one example of the automated storage and retrieval system the first spatial direction (x) is parallel to the ground. This suspended system is advantageous in terms of coupling security between the vehicle/s and the structure/s. Especially heavy/large bins can be moved with this automated storage and retrieval system.

According to an alternative example of the automated storage and retrieval system, the second spatial direction (y) is parallel to the ground. The structure is in this case preferably arranged at a vertical plane. This configuration allows for a particularly high number of transportations between handling positions, because the first spatial direction (x) pointing upwards, means that the movement speed in first spatial direction is determined by the second kind of drive unit, which can comprise e.g., the described holonomic wheelset and can work in general at higher speeds than the first drive unit.

Handling positions are positions associated with the automated storage and retrieval system where at least one logistics operation with regards to at least one item, e.g. a storage, a packing, a commissioning, a bundling or a transport, especially a further transport by a transfer unit can occur.

In this application text, parcels are understood to be any physical objects that can be transported and preferably do not exceed certain dimensions and/or a certain weight.

Items of daily use such as consumables or foodstuffs are just as eligible as technical items and equipment. The items can be handled as parcels themselves or be packed in parcels. Parcels are unpackaged objects, packaged objects and repackaged objects, whereby in the case of packaged and repackaged objects the parcel comprises the packaging or repackaging and the object packaged therein. Likewise, it is appropriate to process unpackaged objects, in particular commodity objects, according to embodiments of the present invention. Mail items as well as advertising materials and brochures are also parcels within the meaning of this application, where appropriate.

Unless parcels are specifically referred to as data parcels or virtual parcels in this application, the parcels depicted in this application are physical parcels.

Commodity objects are physical objects that can first be physically acted upon by the logistics system or a component of the logistics system and are then transferred into physical access of another entity. The other entity may be a recipient of the goods or a physical facility configured to exert physical means of action on behalf of the recipient. In various embodiments of implementations of the suspension arrangement according to the present invention, in particular in embodiments of the storage facilities shown in this application as vending facilities, it is appropriate that the transfer of physical availability over the commodity object occurs when the recipient has previously acquired the commodity object.

It is possible to keep any items ready in the storage facilities as parcels for handover to recipients, both recipients to whom the respective items were already assigned at or before their storage in the respective storage facilities, and also to keep items ready which are only assigned to a recipient after their storage in the storage facility, possibly also only immediately before their removal.

The suspension arrangement and its implementation according to the present invention is suitable both for use with individualised parcels, where it is relevant that a parcel with a previously defined content is transmitted to a recipient, and for use for dispensing goods, in particular bulk goods including such goods for which there is no defined recipient before or after storage, possibly even at the time of dispensing, but for which an unidentified person can also be the recipient, in particular when the storage facility is designed as a sales facility.

In order to enable the goods objects to be handed out, it is also possible to transport the goods in containers - preferably using a storage facility according to the present disclosure.

However, the present invention is not limited to embodiments in which the commodity objects are permanently transferred to recipients, but also includes embodiments in which the commodity objects are made available to recipients in a returnable manner, wherein the time period may be fixed or variable. In particular, such goods objects can also be handled as parcels according to the present disclosure.

The handover of the parcels, in particular the plurality of parcels, takes place in particular as one delivery and/or as one removal of the parcels.

The present application concerns handovers of parcels to recipients and/or handovers of parcels by depositors. If it is not specified that the handover is to a recipient, handovers by a depositor are also included. Likewise, if it is not specified in each case that it is a handover by a depositor, a handover to a recipient is also included. In the present application, handovers by a depositor are also referred to as delivery or acceptance, while handovers to a recipient are also referred to as delivery.

Recipients within the meaning of the present invention are entities to which the logistics system or a component of the logistics system transfers or can transfer parcels or other items. Both natural persons and technical units can be recipients in the context of the present application.

Depositors within the meaning of the present application are entities that hand over or can hand over parcels or other items to the logistics system or a component of the logistics system. Both natural persons and technical units can be depositors in the context of the present application. Natural persons or technical units that hand over parcels to the logistics system for a transport operation are also referred to as shippers in the context of the present application. In particular, shipper refers to those depositors who commission a transport of parcels, including a pick-up, if applicable. The present application includes embodiments in which the depositors of parcels are shippers.

In order to achieve the goal of carrying out processing operations of parcels as automatically as possible and preferably also contactlessly and/or autonomously and with the smallest possible ecological footprint, several measures are proposed in this application, which already contain advantages in their individual application, but whose synergetic interaction is particularly advantageous.

For the purposes of the present description, storage facilities are all facilities which enable goods, especially parcels to be made available for further handling, and/or handover to recipients and/or by depositors. Preferably, the storage facility includes a means for storing the parcels, Means for storing the parcels are for example storage facilities designed like lockers. An important advantage of locker-like storage facilities is the combination of a safe and reliable storage of the parcels and an improved retrievability of the parcels, in particular during the intended transfer period. However, means for storing the parcels can also be other facilities that ensure safe and secure storage of the parcels. Preferably, these facilities include means for protecting the parcels from unauthorised removal. Examples of these other facilities are office or business premises, public buildings and facilities, shop premises, private flats, private houses, containers, vehicles, especially cargo bicycles. Means for handover of the parcels (handover means) are in particular also as advanced as possible, as for example described in the international patent application WO2022106598.

The storage facilities are preferably each designed as a module. Preferably, this means that the storage facilities are separable components of a logistics system.

The storage facility can itself be designed as a handover facility or realise functions of a handover facility or also have a handover facility which, in particular, can be designed as a lock in an operating state of the storage facility.

An example provides that a control component controls the process.

The control component is in particular a central component of one of the logistics systems presented in this application. Preferably, the control component is designed in such a way that it controls as many or even all of the processing steps of the parcels as possible. However, it is also possible that the control component only controls individual process steps as described in this application.

The control component of the logistics system can be designed in such a way that the control component can carry out individual or several or even all of the procedures presented in this application.

An example is characterised by the fact that additional local logistics are provided at a storage facility so that, in addition to the parcels provided for handover at the joint handover points, goods objects can be delivered to the storage facility, stored and handed over to recipients as parcels. This results in an additional integration of local logistics.

With an advantageous integration of local logistics at a storage facility, transfer periods can be defined depending on expected order orders.

It is appropriate to pre-fill the storage facility with goods objects for which there is a minimum probability that order requests for a minimum number of the goods objects will be made within the handover period.

In an example, at least some of the order requests can be made via an ordering system, wherein the ordering system is in particular a system for ordering deliveries of parcels and/or collections of parcels.

In an example, a first part of the order requests can be made via an ordering system and a second part of the order requests can be made directly at the storage facility.

Transfer units within the meaning of the present application are all units that are designed to be able to transport parcels between a distribution centre and at least one storage facility.

The term distribution centre includes, in particular, large handling centres of a logistics service provider for parcels.

In an advantageous implementation, the logistics system comprises at least one inbound distribution centre. In the inbound distribution centre, a parcel is sorted for the first time after it is received by the logistics service provider from the shipper for further transport to the delivery area.

In an advantageous implementation, the logistics system comprises at least one outbound distribution centre. In the outbound distribution centre, the parcel is sorted to a specific delivery depot after delivery from the inbound distribution centre.

A parcel identification characteristic is a unique data element that is physically and/or virtually assigned to the parcel and enables its reliable identification, in particular its unique identification. The reliable identification can refer to one or more process steps or to the entire logistics process from the delivery of a parcel to the output of the parcel. It is particularly advantageous that the parcel identification characteristic relates to the entire logistics process, but, the use of the parcel identification characteristic in fewer process steps than the overall process is also encompassed by the invention.

A parcel identification characteristic preferably includes one or more characteristics which, alone or in combination with each other and/or in combination with information about one or more processing operations of a parcel, allow a reliable identification of the parcel.

Parcel identification characteristics are in particular
- Parcel identification codes;
- Product codes;
- Shipper identification characteristics;
- Depositor identification features;
- Recipient identifiers;

In order to facilitate or enable the autonomous handling of parcels, individual, several and particularly preferably as many as possible of the processing units shown in this application, in particular storage facilities or transfer units, are preferably equipped with a means for detecting parcel identification characteristics of the parcels and for handling the parcels according to the parcel identification characteristics.

In particular, the handling of the parcels according to the parcel identification characteristics, and in particular a storage of the parcels in storage positions of a storage unit of the storage facility taking into account the parcel identification characteristics, supports an autonomous handling of the parcels. It is particularly advantageous to design the transfer units in such a way that they can carry out autonomous handling of the parcels. Appropriate measures for autonomous handling of the parcels relate in particular to:
- Transport,
- Routing,
- Sorting,
- Storage and
- Commissioning.

An example is characterised in that a singular transfer of the parcels takes place by means of at least one movable transport unit, wherein the movable transport unit is controllable in such a way that it can transfer the singularised parcels into the storage positions of the storage facility of the storage facilities, taking into account the parcel identification characteristics.

A parcel identification code is in particular a code which is used to identify the parcel and which is in particular physically and/or virtually connected to the parcel, whereby it is particularly advantageous if the parcel identification code is also physically connected to the parcel. This applies in particular if the parcel identification code is used as a parcel identification characteristic or as one of the parcel identification characteristics.

An advantageous further development of the system is that, in addition to the parcels intended for handover at the joint handover points, goods objects can be delivered to the storage facility, stored and handed over as parcels.

An appropriate embodiment of the system provides that at least some of the goods objects can be dispensed at the storage facility where they were handed over as parcels.

Implementations according to the present invention can also be described by the following characteristics. The characteristics presented below can be combined with each other as well as with the following presentation of preferred embodiments based on the figures, whereby particularly preferred combinations of characteristics are highlighted by reference to previously presented combinations of characteristics.

AA. Automated storage and retrieval system for the storing of items in a storing arrangement, with a suspension arrangement according to the present disclosure for lifting, transferring and lowering the items, wherein the suspension arrangement comprises independently movable vehicles and wherein the area, wherein the vehicles can move, faces an area of the storing arrangement, where a transfer of items between the storing arrangement and the gripping units of the vehicles movable along the suspended structure can occur.

AB. Automated storage and retrieval system for the storing of items in a storing arrangement, with a suspension arrangement for lifting, transferring and lowering the items, wherein the suspension arrangement comprises independently movable vehicles and wherein the area, wherein the vehicles can move, faces an area of the storing arrangement, where a transfer of items between the storing arrangement and the gripping units of the vehicles movable along the suspended structure can occur.

AC. Automated storage and retrieval system for the storing of items in a storing arrangement, with a suspension arrangement for lifting, transferring and lowering the items, wherein the suspension arrangement comprises independently movable vehicles and wherein the area, wherein the vehicles can move, faces an area of the storing arrangement, where a transfer of items between the storing arrangement and the gripping units of the vehicles movable along the suspended structure can occur and wherein no direct contact between the vehicles and the storing arrangement occurs, but the only contact occurs between the gripping units of the vehicles and the items which are stored and/or retrieved by the usage of the gripping units.

AD Automated storage and retrieval system for the storing of items in a storing arrangement, especially with a combination of previously presented characteristics, respectively combinations of characteristics AA to AC, wherein an inspection equipment is integrated for monitoring a status of the items.,

BA. Method of using an automated storage and retrieval system for the storing and retrieval of items in a storing arrangement, with a suspension arrangement for lifting, transferring, and lowering the items with vehicles , each configured for moving along the suspension arrangement wherein the suspension arrangement is configured for active motion of the vehicle in said first spatial direction and/or said second spatial direction so that the vehicles can move individually, wherein no direct contact between the vehicles and the storing arrangement occurs, but only between the gripping units of the vehicles and the items which are storing arrangement occurs stored and/or retrieved.

BB. Method of using an automated storage and retrieval system for the storing and retrieval of items in a storing arrangement, with a suspension arrangement for lifting, transferring, and lowering the items with a vehicle, each configured for moving along the suspension arrangement wherein the suspension arrangement is configured for active motion of the vehicle in said first spatial direction and/or said second spatial direction so that the vehicles can move individually, wherein no direct contact between the vehicles and the storing arrangement occurs, but only between the gripping units of the vehicles and the items which are storing arrangement occurs stored and/or retrieved wherein the vehicle moves omnidirectionally along at least one structure resp. along at least one of the structures, especially allowing for (fast) passing maneuvers thus increasing the number of transportations.

BC. Method of using an automated storage and retrieval system for the storing and retrieval of items in a storing arrangement, with a suspension arrangement for lifting, transferring, and lowering the items with at least one (crawler type) vehicle/unit, configured for moving along the suspension arrangement wherein the suspension arrangement is configured for active motion of the vehicle in said first spatial direction and/or said second spatial direction so that the vehicle can move individually, wherein no direct contact between the vehicle and the storing arrangement occurs, but only a contact between the gripping units of the vehicle and the items which are stored into the storing arrangement and/or retrieved from the storing arrangement wherein the vehicle moves omnidirectionally along at least one structure, especially allowing for (fast) passing maneuvers thus increasing the number of transportations.

BD. Method of using an automated storage and retrieval system for the storing and retrieval of items in a storing arrangement, with a suspension arrangement for lifting, transferring, and lowering the items with vehicles, each configured for moving along the suspension arrangement wherein the suspension arrangement is configured for active motion of the vehicle in said first spatial direction and/or said second spatial direction so that the vehicles can move individually, wherein no direct contact between the vehicles and the storing arrangement occurs, but only between the gripping units of the vehicles and the items which are storing arrangement occurs stored and/or retrieved wherein the vehicle moves omnidirectionally along at least one structure, especially allowing for (fast) passing maneuvers thus increasing the number of transportations.

BE. Method of using an automated storage and retrieval system for the storing and retrieval of items in a storing arrangement especially with a combination of previously presented characteristics, respectively combinations of characteristics BA to BD, wherein process protocols for a number of retrieval actions and/or storage actions are evaluated and wherein the number of vehicles is adapted/modified.

BF. Method of using an automated storage and retrieval system for the storing and retrieval of items in a storing arrangement especially with a combination of previously presented characteristics, respectively combinations of characteristics BA to BE, wherein a route-planning tool plans a path for at least one vehicle/unit connected to at least one gripping unit along at least one suspension arrangement from one handling position to another, especially taking into account at least momentary positions and paths of at least one other vehicle also coupled to the at least one suspension structure.

BF. Method of using an automated storage and retrieval system for the storing and retrieval of items in a storing arrangement especially with a combination of previously presented characteristics, respectively combinations of characteristics BA to BE, wherein by the integration of inspection equipment, it is monitored, if an actual state of the items and/or their status, especially storage or retrieval status has changed.

BG. Method of using an automated storage and retrieval system for the storing and retrieval of items in a storing arrangement especially with a combination of previously presented characteristics, respectively combinations of characteristics BA to BF, wherein by the integration of inspection equipment, it is monitored, if an actual state of the items and/or their status, especially storage or retrieval status has changed, that it is checked, if a risk that an item deteriorates, and that in the case that a risk is detected, that the item deteriorates a retrieval of this item is advanced.

BH. Method of using an automated storage and retrieval system for the storing of items in a storing arrangement especially with a combination of previously presented characteristics, respectively combinations of characteristics BA to BG, with a suspension arrangement for lifting, transferring, and lowering the items wherein a route-planning tool plans a path for at least one vehicle/unit connected to at least one gripping unit along at least one structure from one handling position to another, especially taking into account at least momentary positions and paths of at least one other vehicle also coupled to the at least one structure, wherein the vehicle moves omnidirectionally along the at least one structure, especially allowing for (fast) passing maneuvers thus increasing the number of transportations.

Preferably, the storing arrangement and the suspension arrangement are separated from each other, especially allowing a movement of the vehicles and a wherein a stop of the vehicles close to items, wherein no direct contact between the vehicles and the storing arrangement occurs, but only between the gripping units of the vehicles and the items which are storing arrangement occurs stored and/or retrieved.

It is useful to integrate and adapt known software concepts for the operation of the automated storage and retrieval system according to the present disclosure. However, it is especially recommendable to implement a learning system, and/or a method of providing process protocols for a number of physical objects (O), which pass through several production/processing stations (P 1 ... Pn) in a production/processing line, wherein
machine-readable data (D) are assigned to at least one object (O), wherein the data comprise at least one identification, by means of which the respective object can be uniquely identified,
at least one reading means (R) is arranged at least one production/processing station (P 1 ... Pn), which is adapted to read out the machine-readable data (D) assigned to the objects (O),
the respective reading means (R) arranged at a production/processing station (P 1 ... Pn) reads out the machine-readable data (D) assigned to the object (O) as soon as the object reaches and/or leaves the production/processing station (P 1 ... Pn),
the machine-readable data (D) that have been read out are assigned to the respective production/processing station (P 1 ... Pn) and/or the respective reading means (R),
at least one time stamp is assigned to the machine-readable data (D) read out by the respective reading means (R),
the process protocol is generated from the machine-readable data (D) read out by the at least one reading means (R), the assignment of the machine-readable data (D) that have been read out to the production/processing station (P 1 ... Pn) and/or to the reading means (R), and the time stamp assigned to the machine-readable data (D) that have been read out, wherein the process protocol comprises a number of data sets, wherein each data set describes a process step of a process, and wherein each data set of the process protocol comprises at least:
   a first attribute, in which a unique identification of a process is stored and by means of which the process step is assigned to the process;
   a second attribute, in which an identification of the process step is stored; and
   a third attribute, in which a sequence of the process steps within a process is stored; and the process protocol that has been generated is stored in a storage means (DB).

An adaptable example of such a method is, for example, described in the European patent EP3803727B1 which proposes a method for providing process protocols and the adaptation and utilization of these process protocols.

According to one example, the automated storage and retrieval system further comprise at least one route planning tool for route planning along the at least one structure resp. along at least one of the structures, resp. fort at least one vehicle/unit.

Exemplarily, the at least one (crawler type) vehicle/unit can comprise a sensing device comprising at least one sensor from the following group: speed sensor, distance sensor, height and position measuring sensor, force sensor, acceleration sensor resp. gyroscope.

The automated storage and retrieval system, especially the route planning tool, can be configured for transmitting commands to a communication unit of the at least one vehicle/unit, especially to the communication units of all vehicles individually, such that control units of the vehicles control their respective vehicle based on received commands as well as based on momentary measuring data of at least sensor.

The communication unit can be configured for wireless communication at least within the automated storage and retrieval system, wherein the (respective) vehicle or the suspension structure provides energy to the communication unit, especially such that the communication unit of the vehicle is energetically self-sustaining (autarkic) for at least a period of several days or weeks or month.

The automated storage and retrieval system can be configured for localizing individual vehicles based on at least one locating signal transmitted by individual vehicles (passively or actively, e.g., passively based on at least one individual transmitter, especially based on individual identification features). Additionally, the vehicles transmit sensor data and information about destination handling positions to the at least one route planning tool when a request to do so is received in the communication unit of the vehicle.

According to one aspect, the suspension arrangement and its implementation according to the present invention can involve a method of using an automated storage and retrieval system, wherein a route-planning tool plans a path for at least one vehicle/unit connected to at least one gripping unit along at least one structure from one handling position to another, especially taking into account at least momentary positions and paths of at least one other vehicle, especially all vehicles also coupled to the at least one structure, wherein the vehicle moves omnidirectionally along the at least one structure, especially allowing for (fast) passing maneuvers. This increases the number of transportations between handling positions.

According to a further aspect of the invention, a computer implemented method of planning and defining at least one path of motion for at least one crawler type unit of at least two crawler type units of at least one pair of crawler type units linked to each other in pairs via linking means in a suspension arrangement according to the present disclosure is provided, the method comprising the following steps:
processing data of at least momentary positions and paths of motion of said at least two crawler type units linked in pairs and optionally of at least one further crawler type unit also coupled to the at least one structure, wherein the planning and defining of said at least one path of motion is carried out such that the respective crawler type unit or pair of crawler type units move/s omnidirectionally along the at least one suspension structure, especially including paths of motion for passing maneuvers, with at least one of the crawler type units of the at least one pair of crawler type units either moving synchronously (e.g. with respect to the at least one further crawler type unit or with respect to the linked crawler type unit) or individually.

According to one embodiment, the computer implemented method of planning and defining at least one path of motion is implemented for route-planning for an automated storage and retrieval system, especially for an automated storage and retrieval system according to the present disclosure, the method comprising the following steps:
- receiving in a route-planning tool a request to plan a path of motion from a starting handling position to a destination handling position from a crawler type unit or a group of crawler type units, especially a group of at least two synchronized crawler type units,
- obtaining and verifying position information of at least one further crawler type unit by sending a request to the at least one further crawler type unit, receiving a current position, and comparing the current position with the predicted positions of the crawler type units, wherein the prediction takes into account momentary positions and/or measured data of the crawler type units, and a planned route for the crawler type units,
- planning the path of motion for the crawler type unit or the group of (especially synchronized) crawler type units from the starting handling position to the destination handling position, especially by solving an optimization problem, thereby minimizing the traveling time taking into account path length, potential wait time of each (alternative) path, and predicted positions of other/further crawler type units to avoid collisions and/or increases the number of transportations between handling positions. It should be noted that such method described by referring to crawler type units may also involve planning and defining at least one path of motion for any further type of vehicle.

Such a computer implemented method can also involve at least one of the following steps:
- receiving in a route-planning tool a request to plan a path from a starting handling position to a destination handling position from a vehicle or a group of synchronized vehicles,
- obtaining and verifying position information of at least one other vehicle by sending a request to the at least one other vehicle, receiving a current position, and comparing the current position with the predicted positions of the vehicles, wherein the prediction takes into account momentary positions and/or measured data of the vehicles, and a planned route for the vehicles,
- planning the path for the vehicle or the group of synchronized vehicles from the starting handling position to the destination handling position by solving an optimization problem, minimizing the traveling time taking into account path length, potential wait time of each path, and predicted positions of other vehicles to avoid collisions.

According to a further aspect of the invention, a/the suspension arrangement according to the present disclosure is implemented for use in a warehouse, wherein the suspension arrangement comprises at least one shelf removal and loading unit, wherein first structure is placed at a ceiling and the second structure is placed at a bottom, wherein the linking means preferably comprise two bars for each pair of crawler type units linked to one another. In particular, with a ceiling extending horizontally, at least approximately, the angle (α) preferably is 180 degrees, at least approximately. Alternatively, with a ceiling extending e.g. at an angle of e.g. 10 or 20 degrees relative to the horizontal plane, the angle (α) preferably is 170 or 160 degrees, at least approximately.

Further advantages, features, and advantageous refinements of the invention are derived from the dependent claims and the following description of preferred embodiments with reference to the figures.

### Brief description of the drawings

Further advantages and preferred further embodiments of the invention can be seen from the following illustration of preferred embodiments based on the figures.

In the accompanying drawings, various aspects of automated storage and retrieval systems according to the invention are discussed.

Of the figures show
- **Fig. 1a, 1b**: exemplary suspension elements for de-/coupling crawler type units/vehicles with/to/from structure;
- **Fig. 1c, 1d**: exemplary counter wheels for enhancing grip between a crawler type unit/vehicle and a structure;
- **Fig. 2a-2n**: kinematic aspects and details of a single crawler type unit/vehicle according to embodiments of the invention;
- **Fig. 3a, 3b**: a drive unit (of the first kind) of a crawler type unit/vehicle according embodiments of the invention;
- **Fig. 3c, 3d**: an exemplary counter wheel unit;
- **Fig. 3e, 3f**: a first arrangement of drive units (of the first kind) and a counter wheel unit;
- **Fig. 3g, 3h**: a second arrangement of drive units (of the first kind) and a counter wheel unit;
- **Fig. 3i**: a side view of a drive unit (of the first kind) and a counter wheel unit coupled into a structure;
- **Fig. 4a, 4b**: an arrangement of drive units (of the first kind) with counter wheel units with a motor (and a housing);
- **Fig. 4c**: a crawler type unit/vehicle according to a first embodiment;
- **Fig. 4d**: a crawler type unit/vehicle according to a second embodiment;
- **Fig. 4e, 4f**: the crawler type unit/vehicle according to the second embodiment in side-views;
- **Fig. 5a-5b**: a suspension arrangement (in parts) according to embodiments of the invention with conveyor/connector rails;
- **Fig. 6**: a suspension arrangement (in parts) according to an embodiment with a conveyor/connector rail;
- **Fig. 7**: a suspension arrangement (in parts) according to an embodiment with two structures and a conveyor/connector rail;
- **Fig. 8**: details of a crawler type unit/vehicle driving along a conveyor/connector rail;
- **Fig. 9**: a suspension arrangement (in parts) according to an embodiment with a conveyor/connector rail;
- **Fig. 10**: a suspension arrangement (in parts) according to an embodiment with two structures connected via a conveyor/connector rail;
- **Fig. 11**: a detail of a crawler type unit/vehicle driving along a conveyor/connector rail.
- **Fig. 12a-b**: in a perspective side view and in a detailed enlarged view a structure suspending a crawler type unit of a suspension arrangement according to embodiments of the present invention.
- **Fig. 13a-b**: in a side view and in a detailed enlarged view a structure for suspension of a crawler type unit of a suspension arrangement according to embodiments of the present invention.
- **Fig.14a-b**: respectively in a perspective side view a suspension arrangement according to embodiments of the present invention, wherein Fig. 14a describes an ar- rangement of the first structure extending in parallel with the second structure, and wherein Fig. 14b describes an arrangement of the first structure extending orthogonally to the second structure.
- **Fig.15**: a perspective side view of a section of a storing arrangement with a suspension arrangement according to embodiments of the invention located at a side of stored items / a storing arrangement.
- **Fig.16**: a perspective side view of a section of a suspension arrangement according to the invention, wherein the suspension arrangement can be located at a side of stored items / a storing arrangement.
- **Fig. 17a-d**: a perspective side view of a vehicle moveable along a suspension arrangement or a section of a suspension arrangement according to embodiments of the invention, wherein the suspension arrangement can be located e.g. also at a side of stored items / a storing arrangement.
- **Fig. 18a-f**: a perspective side view of a vehicle moveable along a suspension arrangement or a section of a suspension arrangement according to embodiments of the invention, wherein the suspension arrangement can be located e.g. also at a side of stored items / a storing arrangement.
- **Fig. 19a-c**: in a side view and a perspective side view and a plan view an automated storage and retrieval system comprising a suspension arrangement according to embodiments of the present invention.
- **Fig. 20**: in a perspective side view a suspension arrangement according to embodiments of the present invention, wherein a pair of first and second crawler type units is linked to one another via linking means comprising at least one telescopic mechanism, wherein the linking means is linked to at least one of the crawler type units by means of a linking joint or linking coupling, wherein the first and second structures extend in planes which are parallel to each other, at least approximately.
- **Fig. 21**: in a perspective side view a suspension arrangement according to embodiments of the present invention, wherein a pair of first and second crawler type units is linked to one another via linking means comprising at least one telescopic mechanism, wherein the linking means is linked to at least one of the crawler type units by means of a linking joint or linking coupling, wherein the first and second structures extend in planes which are orthogonal to each other, at least approximately.
- **Fig. 22**: in a perspective side view a suspension arrangement according to embodiments of the present invention, wherein a pair of first and second crawler type units is linked to one another via linking means comprising at least one bar, e.g. a rigid bar, wherein the first and second structures extend in planes which are parallel to each other, at least approximately.
- **Fig. 23a-c**: respectively in a perspective side view a suspension arrangement according to embodiments of the present invention, wherein the suspension arrangement comprises at least one shelf removal and loading unit which is configured to handle items from two sides resp. in two directions.

### Detailed description of the drawings

The invention will now be described first in general for the inventive concept with reference to all drawings, before the drawings are described in detail.

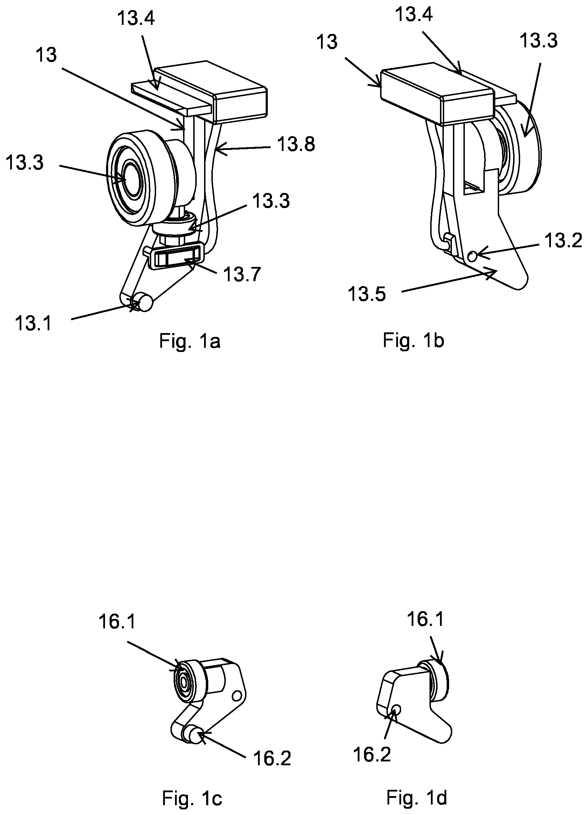

The examples depicted in Figs. 1 to 11 refer to embodiments, wherein the vehicles are designed as crawler type vehicles.

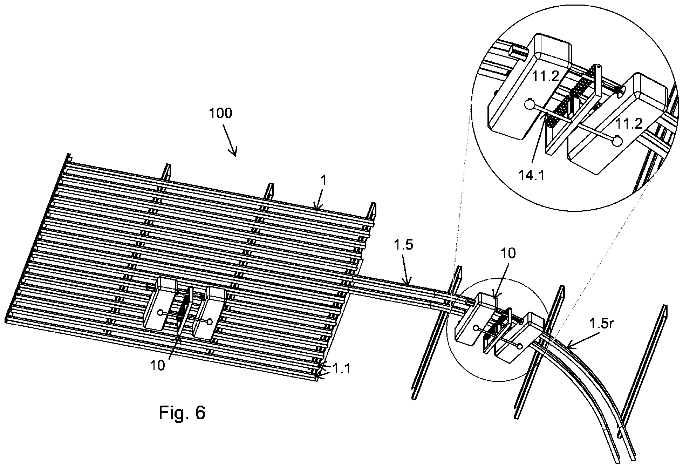

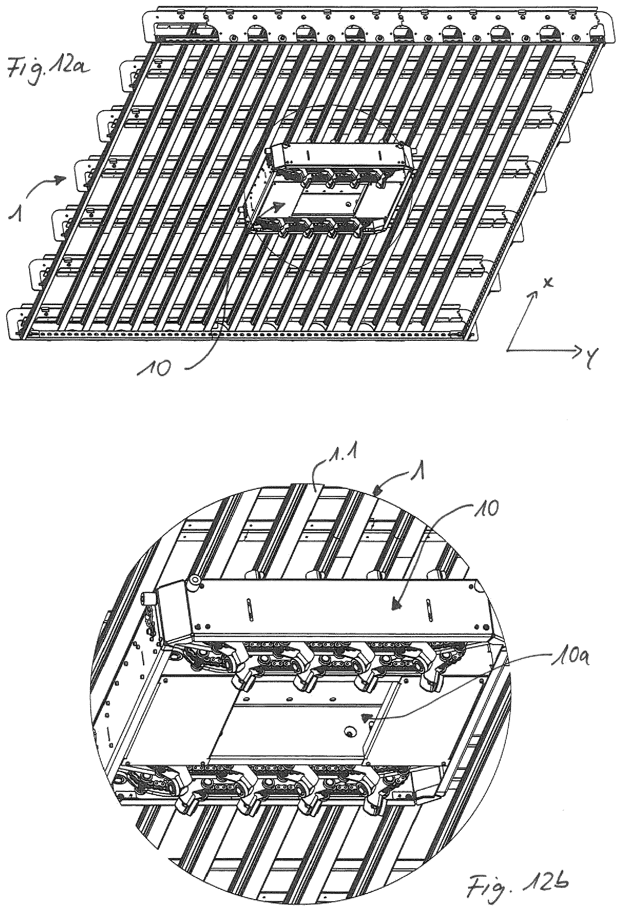

The examples according to Figs. 12, 13, 14, 15, 16, 17, 18, 19 refer to an integration of suspended vehicles in embodiments of described automated storage and retrieval systems general. However, it is preferred to integrate crawler type vehicles as described Figs. 1 to 5c as vehicles in the embodiments according to Figs. 6 ff.

The vehicles can comprise at least one motor/actuator for actively driving the vehicle along the structure.

Preferably each vehicle follows an intended direction resp. an intended path of motion, especially in conjunction with appropriate sensor-actor-arrangements.

The suspension structure can comprise at least one energy charging point/position/area, wherein the suspension structure is configured for charging/providing the at least one vehicle/unit with energy when being arranged in/at said energy charging point/position/area. For example, the charging area covers at least one charging section or the whole structure.

By arranging a suspension arrangement that comprises (twice) at least one (crawler type) vehicle/unit and a structure extending in at least two spatial directions, wherein the structure comprises a plurality of profile units extending in a first spatial direction, wherein the structure defines in at least a part of its surface at least one structural regularity in a second spatial direction; and wherein the at structure comprises a plurality of suspension elements configured for suspending the at least vehicle, wherein the at least one vehicle comprises at least one vehicle, wherein the at least one vehicle comprises a gripping unit, wherein the gripping unit is configured to connect to at least one container; and wherein the suspension arrangement is configured for active motion of the vehicle in said first spatial direction and/or said second spatial direction for lifting, transferring and lowering the containers parallel to at least one transfer area for the containers in an appropriate distance from the adjacent side of stored items the items can be flexibly stored and retrieved.

It is especially useful to use at least two vehicles which can operate independently, especially move independently.

The described embodiments of the invention can be adapted to items to be stored with predefined upper and/or lower boundaries for their weight and/or size as well to handle stored items that can have different sizes, shapes and weights. The size and configuration of the ceiling arrangement and its components for lifting, transferring and lowering the items is partly predefined, especially by the dimension and strengths of profiles implemented in the structure. Other parts of the ceiling arrangement can be modified more easily, for example by connecting vehicles with gripping units which are adapted to the items to be stored to the structure. Furthermore, the number of vehicles connected to the suspension structure can be modified.

The vehicles can especially be operated by using at least one route planning tool for route planning along the at least one structure.

Exemplarily, the at least one vehicle can comprise a sensing device comprising at least one sensor from the following group: speed sensor, distance sensor, height and position measuring sensor, force sensor, acceleration sensor resp. gyroscope.

The automated storage and retrieval system, especially the route planning tool, can be configured for transmitting commands to a communication unit of the at least one vehicle, especially to the communication units of all vehicles individually, such that control units of the vehicles control their respective vehicle based on received commands as well as based on momentary measuring data of at least sensor.

The communication unit can be configured for wireless communication at least within the automated storage and retrieval system, wherein the (respective) vehicle or the suspension structure provides energy to the communication unit, especially such that the communication unit of the vehicle is energetically self-sustaining (autarkic) for at least a period of several days or weeks or month.

The automated storage and retrieval system can be configured for localizing individual vehicles based on at least one locating signal transmitted by individual vehicles (passively or actively, e.g., passively based on at least one individual transmitter, especially based on individual identification features). Additionally, the vehicles transmit sensor data and information about destination handling positions to the at least one route planning tool when a request to do so is received in the communication unit of the vehicle.

Each of the depicted embodiments can be combined with a route-planning tool that plans a path for at least one vehicle/unit connected to at least one gripping unit along at least one of the structures from one handling position to another, especially taking into account at least momentary positions and paths of at least one other vehicle, especially all vehicles also coupled to the structures, wherein the vehicle moves omnidirectionally along the structures, especially allowing for (fast) passing maneuvers. This increases the number of transportations between handling positions.

For operating the automated storage and retrieval system, a computer implemented method for route-planning for an automated storage and retrieval system is provided, the method comprising the following steps:
- receiving in a route-planning tool a request to plan a path from a starting handling position to a destination handling position from a vehicle or a group of synchronized vehicles,
- obtaining and verifying position information of at least one other vehicle by sending a request to the at least one other vehicle, receiving a current position, and comparing the current position with the predicted positions of the vehicles, wherein the prediction takes into account momentary positions and/or measured data of the vehicles, and a planned route for the vehicles,
- planning the path for the vehicle or the group of synchronized vehicles from the starting handling position to the destination handling position by solving an optimization problem, minimizing the traveling time taking into account path length, potential wait time of each path, and predicted positions of other vehicles to avoid collisions.

The crawler type vehicles can comprise at least one first drive unit 11 which may provide for accommodation of a crawling or driving mechanism 11.1 with motor(s), which allows for circumferential motion of suspension elements 13 along circumferential tracks 12, namely simultaneously along a first and a second circumferential track 12a, 12b, which tracks comprise individual shapes/contours XZa, XZb. Preferably, the tracks only extend two-dimensionally (2D), i.e., in a plane, and the shape is different at least in curved sections 12r of the tracks. Each track 12a, 12b comprises a parallel/linear section 12p (resp. two parallel sections) and at least one redirection/curved section 12r (resp. two curved sections). A lateral area resp. surface shell of the at one chassis or housing is preferably flat, plane, even, respectively on each lateral side. Such a configuration is favorable in view of interconnection of several housings 17 (side by side).

The crawler type vehicle 10 comprises at least one further housing 17 (preferably in the same drive unit 11) comprising first and second circumferential tracks 12a, 12b and accommodating a plurality of further suspension elements 13b which are arranged mirror-inverted, with respect to the suspension elements 13 of the first housing 17. Both types of suspension elements 13, 13b can be arranged within the same drive unit 11, and optionally, both types of suspension elements 13, 13b can be guided by the same pair of circumferential tracks 12a, 12b. The drive unit 11 may actively provide for a traveling motion (e.g., by a synchronous guiding/driving motion of/to the suspension elements 13, 13b). Several first drive units 11a, 11b, 11c can be interconnected, e.g., via cross-beams or the like. The desired/required traveling motion can be controlled via a control unit which can be coupled to at least one motor 11.5. A drive section may also comprise at least one gear unit 18 configured for interacting with the track(s) and at least one energy storage unit. A sensor arrangement comprising at least one sensing device, e.g., comprising position sensors and velocity sensors and/or weight sensors and/or gyroscopes, may provide sensor data to the control unit.

Preferably, each suspension element 13, 13a, 13b comprises a first pulley 13.1 and a second pulley 13.2, and optionally, at least one wheel 13.3 is provided at the free end of the suspension element 13 (bearing point/coupling point P13). The first and second pulleys are arranged on a lever arm 13.5 in distance from/to each other (y-offset, longitudinal extension y13 of lever arm); the bearing point P13 resp. the wheel 13.3 is arranged at a protruding section resp. suspension arm 13.6 (z-offset). At the free end of the suspension arm, optionally, a current collector resp. power-slider 13.4 (conductive slider for energy transfer) is provided in an arrangement geometrically corresponding to a/the power rail 1.3 of the respective profile unit 1.1. The plurality of suspension elements 13 of a/the respective first drive unit 17 can be interconnected via longitudinal connecting elements 15 which can ensure a closed loop 15a of interrelated suspension elements. The suspension elements 13 are coupled to the respective circumferential tracks.

In other words: The suspension elements preferably comprise at least one wheel 13.3 performing a rolling motion on the profile units 1.1, preferably on the wheel tread 1.2 and preferably additionally on the side of the profile units, of the structure 1, allowing for a motion which is orthogonal to the motion predefined and evoked by the tracks 12, wherein the wheel 13.3 is positioned and aligned orthogonally with respect to the first and second pulleys 13.1, 13.2. Optionally, the wheel can be motorized e.g., by means of further actuators or motors. The first pulley 13.1 is engaged with the first or second circumferential track, thereby following the contour defined by said track; also, the second pulley 13.2 is engaged with the first or second circumferential track, thereby following said track (which is different from the track engaged by the first pulley, i.e., vice versa). The lever arm 13.5 is preferably L-shaped, especially provided as integral element in one piece (massive, solid).

The structure 1 and its raster 1a is defined by profile units 1.1 being arranged in parallel and with similar distance (pitch) to adjacent profile units. Each profile unit is preferably configured to support geometries/surface(s) which are adequate for interaction with the wheel(s) of the suspension elements (e.g. T-profile, C-profile, L-profile, I-profile), and a series of such profile units preferably provides for a planar surface or for a tubular surface at least in sections.

By means of the circumferential tracks 12a, 12b and the suspension elements 13, the (respective) first drive units 11, and the kinematics defined by the shape of the tracks provide for de-/coupling kinematics 20 which ensure both horizontal/vertical motion kinematics and non-circular pivot motion kinematics. Thereby, de-/coupling of each suspension element can be affected via circumferential motion along the tracks without the need of any axial telescopic motion within each suspension element, i.e., the respective suspension element can be designed as purely mechanic unit.

In the following, the kinematics provided by the guiding/driving motion along circumferential tracks is described in general, first:
The first pulley 13.1 of each suspension element 13 rotates about a first pulley axis and defines a first guiding point G13.1 (coupling the first track and the respective suspension element), and vice versa, the corresponding point of the corresponding circumferential track defines that first guiding point G13.1 for each suspension element. Likewise, the second pulley 13.2 of each suspension element 13 rotates about a second pulley axis (which is preferably aligned in parallel) and defines a second guiding point G13.2 (coupling the second track and the respective suspension element). When referring to the kinematics of each suspension element, an instantaneous center of rotation of each suspension element is defined by the axis of the first pulley 13.1 being coupled to the first track 12a, wherein coupling/attachment/fixation can be ensured e.g. at the axial section between a/the suspension arm 13.6 and the first pulley 13.1. The two tracks 12a, 12b are arranged with respect to another in such a manner that the contacting/bearing point/area P13 (coupling point) of the respective suspension element 13 can be hooked or hitched in the structure. The wheel 13.3 of each suspension element rotates about a wheel axis which is preferably aligned orthogonally to the first and second pulley axis. Since each suspension element 13 is coupled to the tracks 12a, 12b in predefined positions, namely in a predefined first longitudinal position y12a via the first pulley 13.1 and in a predefined second longitudinal position y12b via the second pulley 13.2, when driving the tracks resp. when guiding the suspension elements along the tracks, the bearing point P13 at the free end of the suspension element 13 is guided according to the relative position/contour and distance of the corresponding tracks (of a pair of tracks guiding the respective suspension element).

The crawler type vehicle 10 may comprise a control unit which can be a decentral (individual) control unit. Further, a respective crawler type vehicle 10 may comprise a communicating unit (e.g., near field, mobile network, LAN, LP-WAN, SigFox, NBloT) and/or a transmitter (active or passive), especially for transmitting locating signals. These components are configured to interact in/with a positioning system or route-planning tool.

The crawler type vehicle 10 can be configured to carry a load, which can be attached to the crawler type vehicle 10 at a connecting point. The load may comprise an identification feature, especially a code (e.g., including a number). Likewise, each crawler type vehicle 10 may comprise an identification feature, especially a code (e.g., including a number).

A digital twin referring to a respective crawler type vehicle 10 and/or a digital twin referring to a respective item and/or vehicle can be stored in a database of a route-planning tool.

The database is configured for storing and accessing the at least one digital twin at least comprising information of momentary status, wherein the suspension arrangement is configured to define at least one control parameter for individual crawler type vehicles based on information of the at least one digital twin.

In general, with a structure 1 and a crawler type vehicle 10 of the proposed kind connected to gripping units, a new way of transportation between handling positions in a building is achieved. Omnidirectionally moving gripping units in a vertical plane structure 1 allow for faster transportations as well as a higher number of transportations.

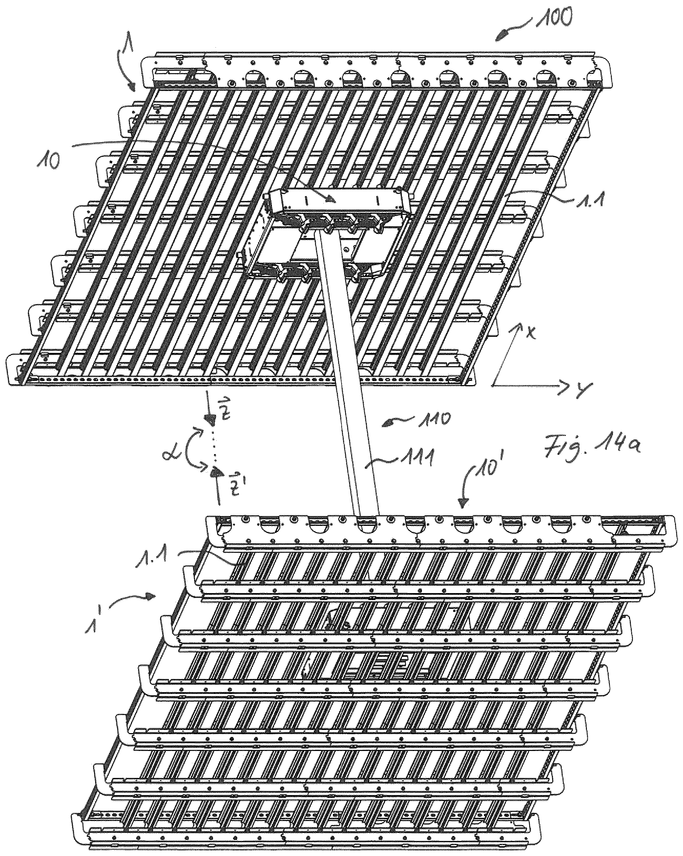

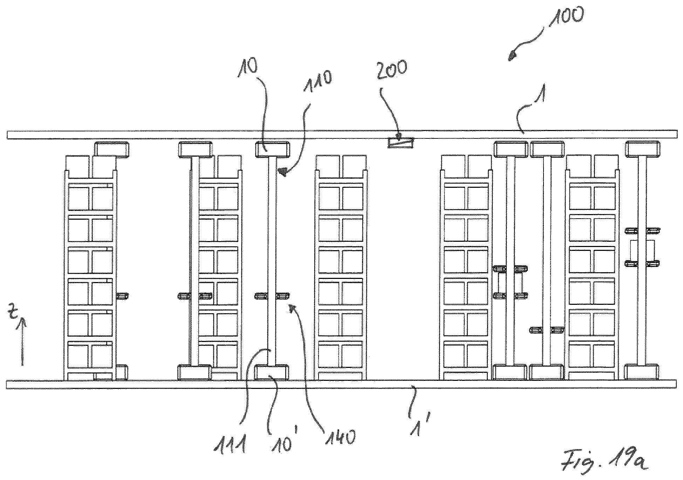

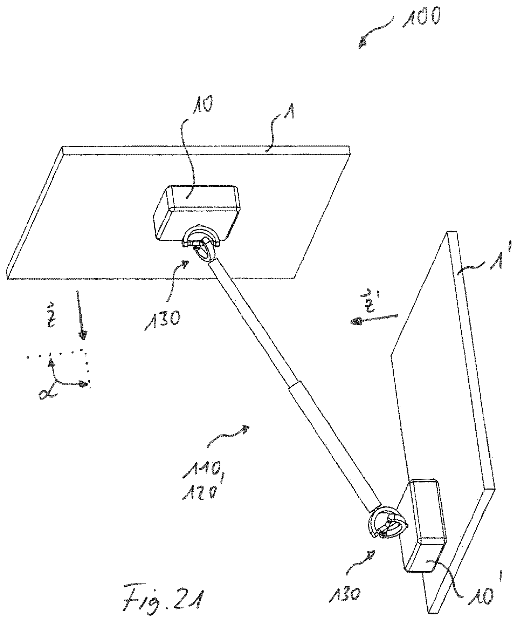

In the figures, (x) designates a/the first spatial direction (especially cross direction, especially direction of longitudinal extension of profile units), and (y) designates a/the second spatial direction (especially longitudinal direction or momentary driving direction of the crawler type vehicle), and in Fig. 19a, (z) designates a/the third spatial direction, and in Fig. 14a, 21, **(z, z')** designate normal vectors with respect to the side/front (engaged by the crawler type units) of the first or second structure.

In **Fig. 1a** and **1b****,** a suspension element 13 is shown in an isolated view from a "front" and "back" side. A first pulley 13.1 intended to be pulled along a circumferential track 12, 12b is shown. The suspension element 13 comprises two elements of motion 13.3, a first wheel to roll on a wheel tread 1.2 of a profile unit 1.1, and a second wheel to roll on a side of the wheel tread 1.2. Additionally, the suspension element 13 comprises a first electrical contact ("current collector") 13.4 to connect to a power line 1.3 integrated into the structure 1 and a second electrical contact 13.7 electrically connected to the first electrical contact 13.4 via a wire 13.8 to provide power to an internal bus of a crawler type vehicle 10.

**Fig. 1c** and **1d** show wheels 16.1 of a counter mechanism 16, wherein the wheels 16.1 push on a "bottom" side of a profile unit 1.1 further enhancing force fit coupling between the crawler type vehicle 10 and the structure 1. Similar to the suspension elements 13, the counter wheels 16.1 comprise pulleys 16.2 intended to be pulled via a chain/belt 16a and guided along a circumferential track to follow a predefined path of motion. Preferably, a crawler type vehicle 10 comprises at least one first set of suspension elements 13 with a first orientation, at least one second set of suspension elements of suspension elements 13b facing in opposite direction (mirror-inverted) and at least one set of counter wheels 16, such that a "T"-shaped profile unit can be clamped between the wheels from all (six) sides, i.e., both sides (top and bottom) of the wheel tread as well as a side of the wheel tread. "Top" and "bottom" in this case are the sides facing away from the crawler type vehicle and towards the vehicle respectively and do not limit the crawler to be used in a ceiling arrangement. The clamping of the profile unit (preferably from all sides) allows vehicles to switch between structures comprising different orientations (e.g., being arranged at a wall, a ceiling, the floor).

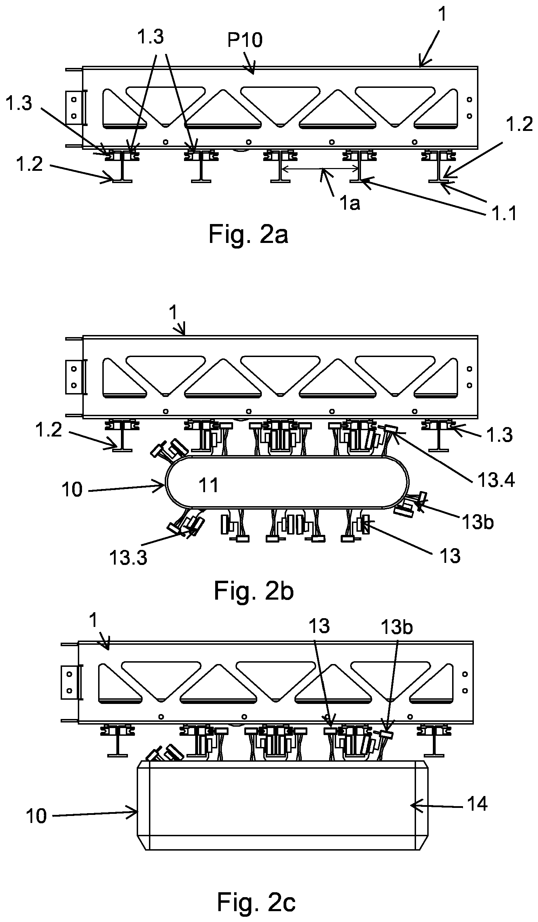

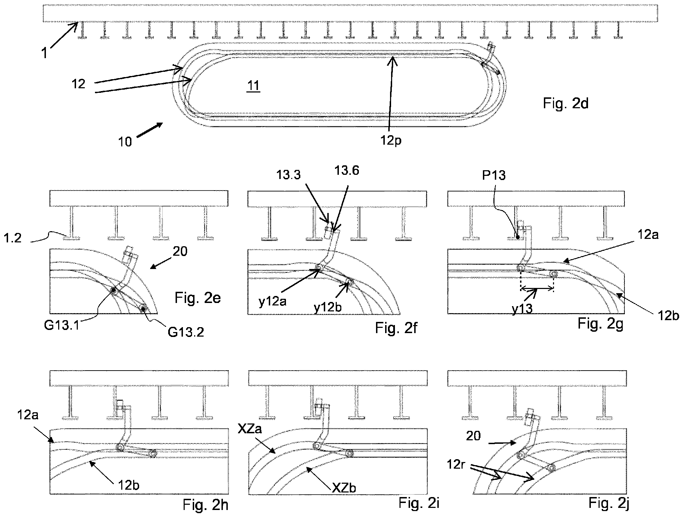

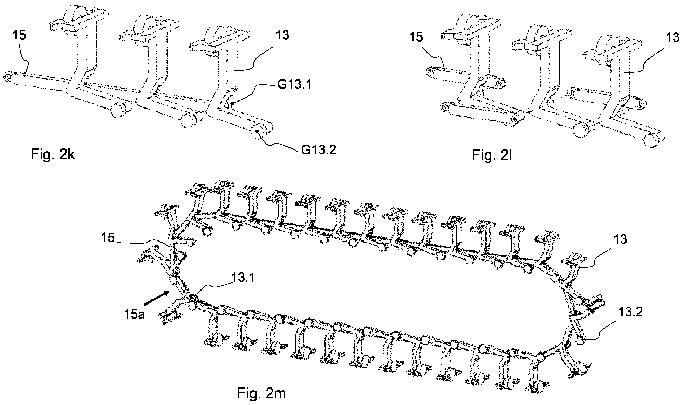

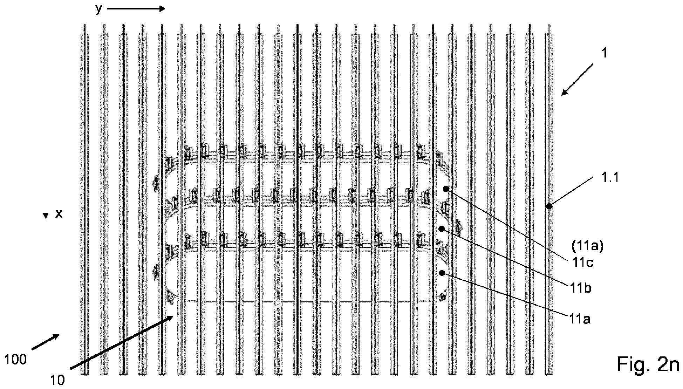

In conjunction with appropriate sensor-actor-arrangements, not shown here, the crawler type vehicle 10 can follow an intended direction resp. an intended path of motion in the structure shown in **Fig. 2****.** Fig. 2a shows a cross-section of an energy charging area P10. The profile units 1.1 respectively comprise treads 1.2, wherein suspension elements 13 comprise at least one wheel 13.3 for gliding or rolling, arranged and configured for moving the crawler type vehicle 10 in the first spatial direction (x). The crawler type vehicle 10 enables two closed loop trajectories of at least two subsets of respective suspension elements, as can be seen in **Fig. 2d****-j.** The circumferential tracks 12, 12a, 12b are shaped in such a manner that the respective suspension elements 13 are de-/coupled from/into the structure 1 when passing a curved section 12r of the tracks 12a, 12b. One subset of the suspension elements 13 is attached to one of the circumferential tracks (resp. a subset of the first subset, momentary) and one further subset of the suspension elements 13 are attached to a further one of the circumferential tracks (resp. a subset of the second subset, momentary) respectively at predefined first and second (further) longitudinal positions respectively corresponding to the structural regularity 1a, with each suspension element being guided by a pair of circumferential tracks. The suspension elements 13 are fixedly attached/coupled by means of a first pulley 13.1 to/with a/the first circumferential track 12a and are guided within a/the second circumferential track 12b by means of a second pulley 13.2 respectively, wherein the first pulley 13.1 and the second pulley 13.2 are arranged at a lever arm 13.5 of the respective suspension element 13. A respective subset of said suspension elements 13 is connected to each other by means of longitudinal connecting elements 15 (chain elements) forming a closed loop of interrelated suspension elements 15a distanced to each other in the predefined structural regularity 1a, as can be seen in **Fig. 2k****-m.** The crawler type vehicle 10 in **Fig. 2b** comprises two kinds/types of suspension elements 13a, 13b, wherein the different types of suspension elements 13 are de-/coupled according to individual kinematics (here, in opposite directions/sides at the profile units 1.1, both in and opposite to the second spatial direction (y) resp. travel direction of the crawler type vehicle 10), wherein a first subset of the suspension elements 13a are attached to a first pair of circumferential tracks 12a, 12b (resp. a subset of the first subset, momentary) and at least one further subset of the suspension elements 13b are attached to a second pair of circumferential tracks 12a, 12b (resp. a subset of the second subset, momentary) respectively at predefined first and second (further) longitudinal positions y12a, y12b respectively corresponding to the structural regularity 1a (resp. to the distance of the profile units defined by said structural regularity), wherein the first and second pairs of circumferential tracks 12a, 12b provide for individual kinematics for the first and second subsets of suspension elements 13a, 13b, especially such that the crawler type vehicle 10 can be secured with respect to opposite sides/directions (of the second spatial direction) at the structure 1 resp. at the profile units 1.1.

In **Fig. 2n****,** each suspension element 13, 13b is guided by a pair of circumferential tracks 12a, 12b, wherein the crawler type vehicle 10 comprises at least three pairs of circumferential tracks 12a, 12b, each guiding a subset of the suspension elements 13, 13b, wherein said de-/coupling kinematics are predefined by said three pairs of circumferential tracks 12a, 12b in such a manner that respective suspension elements 13a, 13b (resp. a subset of the respective subset, momentary) simultaneously de-/couple both at a first side (resp. first longitudinal position) of a respective profile unit 1.1 and at a second side (resp. second longitudinal position) of a respective profile unit 1.1, especially such that the crawler type vehicle 10 is secured with respect to opposite sides/directions (of the second spatial direction) at the structure 1 with all suspension elements 13a, 13b being guided in same circumferential direction with all circumferential tracks 12 being arranged in parallel to each other. The vehicle comprises three (first) drive units 11a, 11b, 11c, wherein two of the drive units 11, 11c comprise suspension elements 13 with a first orientation, and the drive unit 11b in the middle comprises suspension elements with mirror-inverted orientation. The crawler type vehicle 10 comprises at least one motor 11.5 (not shown here) interacting with at least one of the circumferential tracks 12. The crawler type vehicle 10 also comprises an energy storage unit (also not depicted) providing energy to a/the at least one motor of the crawler type vehicle 10. As can be seen in **Fig. 2b****,** the exemplary crawler type vehicle 10 also comprises electrical contacts 13.4 to connect to a power line 1.3 in the structure 1. The power line can be AC or DC, and additionally provide for a communication bus, i.e., powerline communication. To improve safety and electromagnetic shielding of the crawler type vehicle 10, the crawler type vehicle 10 in **Fig. 2c** comprises a protective casing 14.

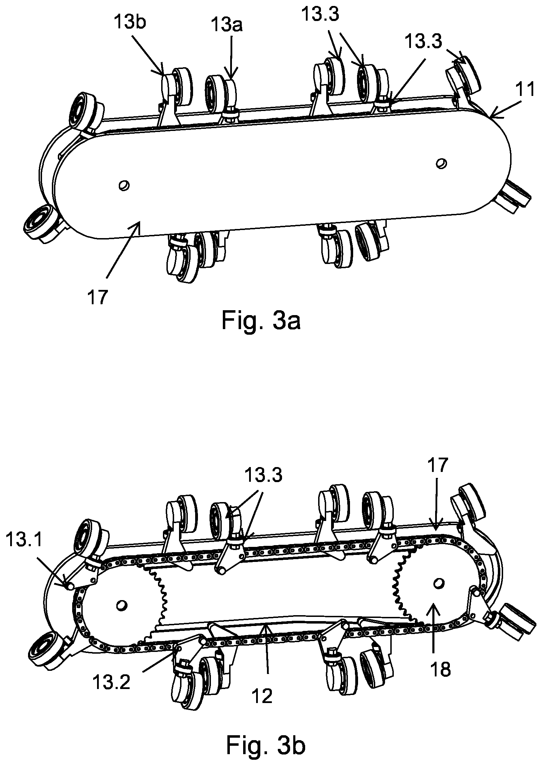

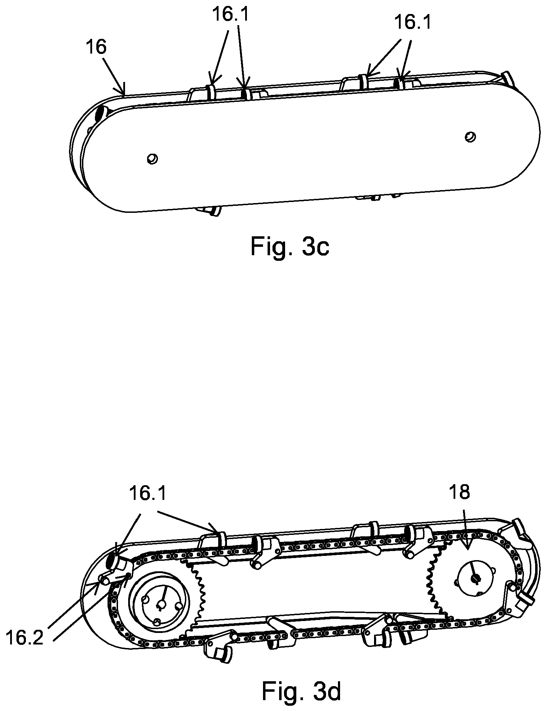

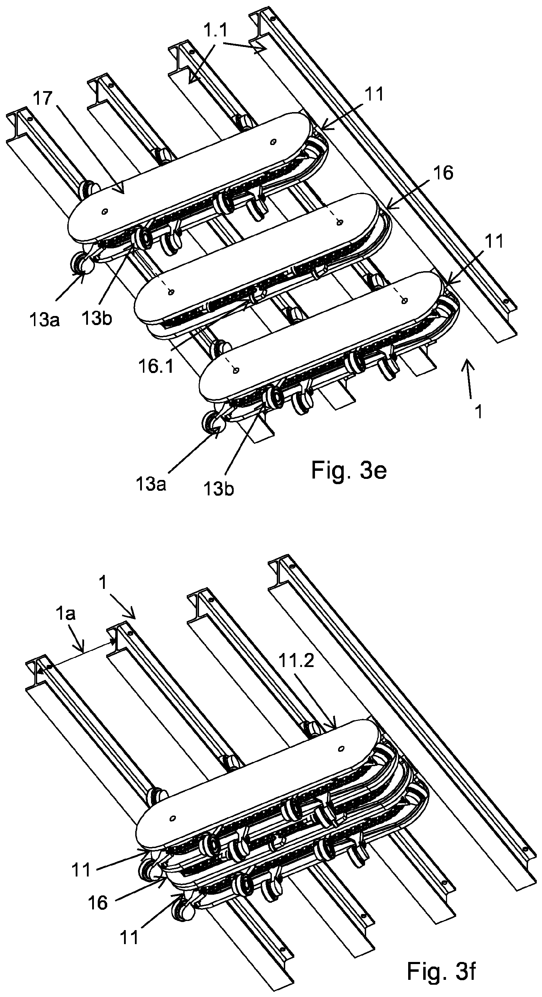

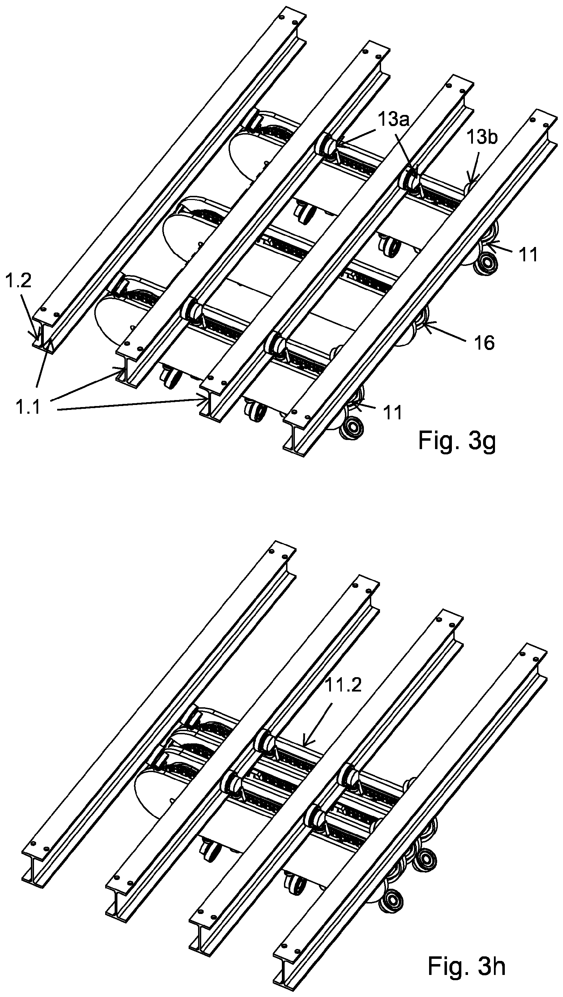

The (first) drive unit 11 shown in **Fig. 3a** comprises suspension elements 13, 13b of the kind described in Fig. 1a, 1b but without the electrical contacts. The electrical contacts being hidden in the remaining figures is for easier interpretation and clarity only. A first set of suspension elements 13 is facing in a first direction, while a second set of suspension elements 13b is facing in a second direction, opposite to the first direction. The (first) drive unit 11 comprises two circumferential tracks 12a, 12b for each set of suspension elements 13, 13b (i.e., in total four circumferential tracks), as described with respect to Fig. 2d-2m. The second housing 17 comprising the two circumferential tracks 12a, 12b for the second set of suspension elements 13b is hidden in **Fig. 3b** to show how the suspension elements 13, 13b can be connected to a common chain 15a (e.g., via pulleys 13.1 of both sets of suspension elements 13, 13b) which can be driven by a gear unit 18 connected to a motor 11.5. **Fig. 3c** and **Fig. 3d** show a further unit 16 (counter unit) guiding counter wheels 16.1 for also contacting profile units 1.1 from a "bottom" side with the same shape as the first drive unit 11. The counter wheels 16.1 alone cannot suspend/fix the crawler type vehicle 10. The counter wheels 16.1 only serve as a counter mechanism to push against the structure 1 to increase the force coupling between the suspension elements 13 and the structure 1. The counter wheels 16.1 also comprise pulleys 16.2 via which they are pulled along two circumferential tracks to follow a predefined motion. Two (first) drive units 11 comprising two sets of suspension elements 13a, 13b respectively being arranged mirror-inverted to grasp a profile unit 1.1 from two sides, as well as two sets of counter wheels 16.1, are shown in **Fig. 3e** and **Fig. 3f****.** The drive units from Fig. 3e and 3f are shown from a diagonally above perspective in **Fig. 3g** and **Fig. 3h****.** The drive units 11 are connected to form a (first) drive arrangement 11.2 comprising two (first) drive units 11 and a counter unit 16. The drive arrangement 11.2 can be driven via a common shaft connected to the gear units 18 of the drive units 11 and counter unit 16 as shown in Fig. 3b and Fig. 3d. The mirror-inverted set of suspension element 13b is hidden behind the profile unit 1.1 in Fig. 3g and 3h. It is preferred to always have at least one set of mirror-inverted suspension elements 13b in order to enhance coupling security with the structure 1.

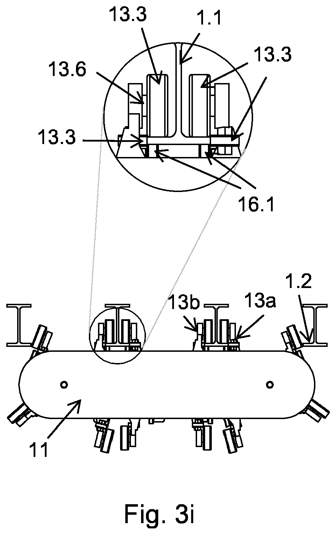

In addition to the two elements of motion 13.3 at the free ends of the suspension elements 13, 13b which couple the crawler type vehicle 10 to the structure 1 from the "top" side of the wheel tread of the profile units 1.1 as well as from the side of the wheel tread 1.2, which is not necessarily as thin as shown in the figures, but can also be wider in order to build the elements of motion 13.3 connecting to the side of the wheel tread bigger to allow for heavier loads to be lifted by a crawler type vehicle 10, especially in structures 1 being arranged at a wall. In **Fig. 3i****,** a side view of a (first) drive unit 11 of a crawler type vehicle 10 coupled via a subset of suspension elements 13, 13b to the structure 1 is shown. In total, six wheels 13.3, 16.1 clamp the "T"-shaped profile unit 1.1 such that slip is minimized.

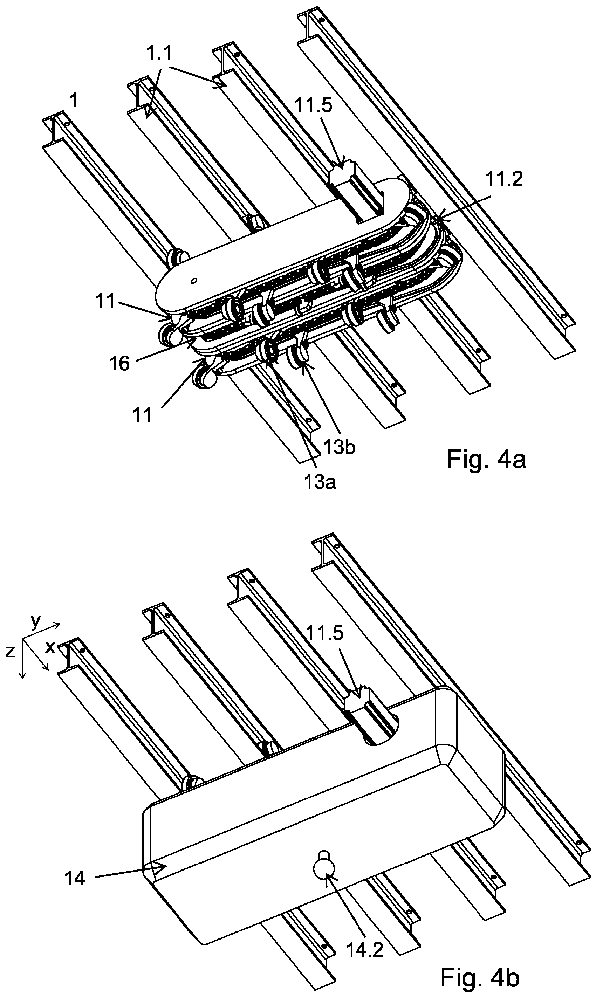

The (first) drive units 11 from Fig. 3e and Fig. 3f form a first drive arrangement with a common motor 11.5 in **Fig. 4a****.** To enhance protection (for and from the surroundings) an additional casing 14 is shown in **Fig. 4b****.** The casing 14 comprises the ball 14.2 of a ball joint 14.1 in the center of the drive arrangement (both in first (x) and second (y) direction). The (first) drive units 11a, 11b of the first drive arrangement 11.2 of course need some flexibility even though they are very close together in order to follow curved profile units 1.1. A short splined shaft with a universal joint (not shown) can exemplarily be used to account for the small changes in angle between the (first) drive units 11 (of one first drive arrangement) when the vehicle 10 is following curved profile units 1.1 (in first spatial direction (x)).

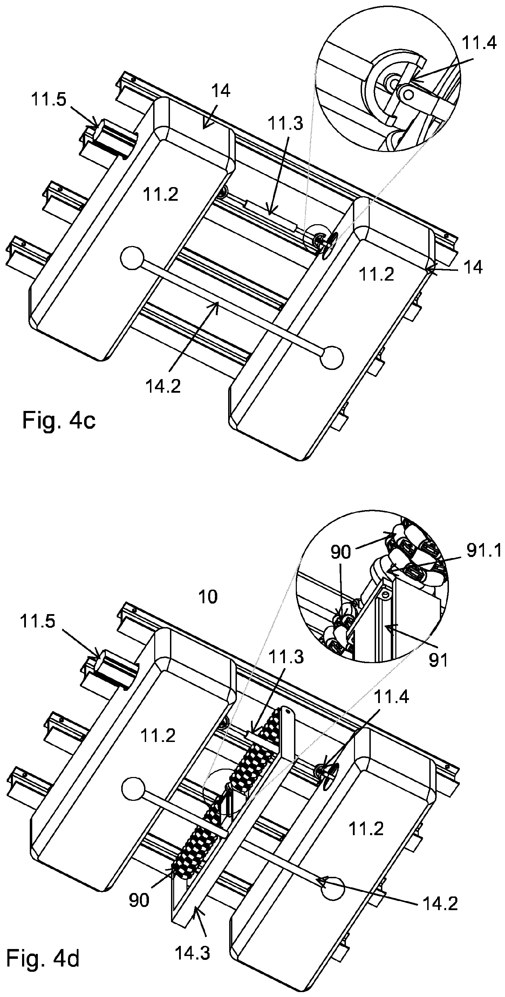

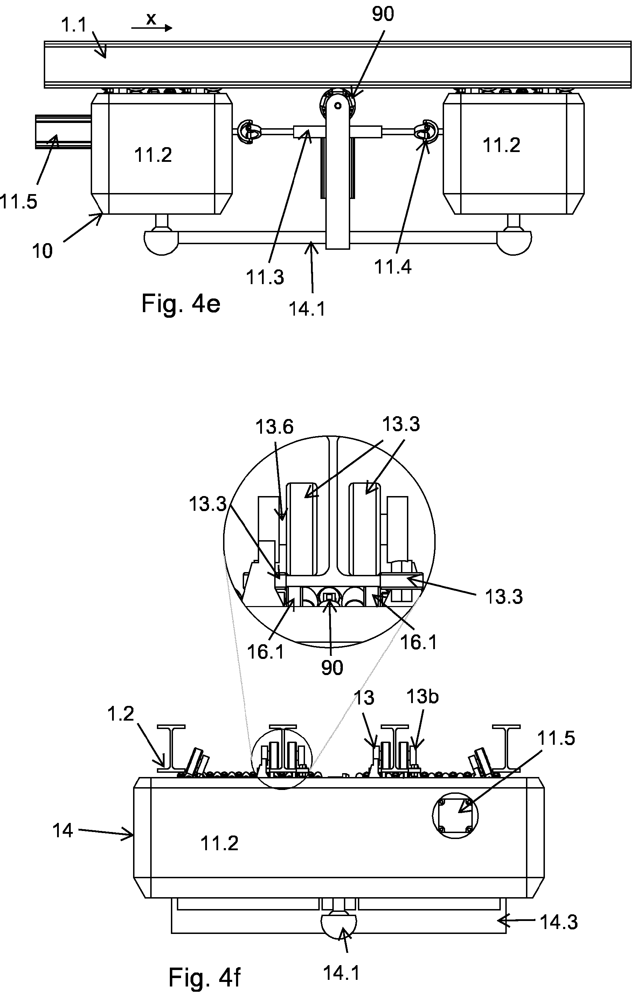

**Fig. 4c** shows a crawler type vehicle 10 according to one embodiment. The crawler type vehicle 10 comprises two arrangements 11.2 of the type shown in Fig. 4b. It is however also possible to only use one (first) drive unit 11 for each of the arrangements 11.2. The two casings 14 of the arrangements 11.2 are coupled via a ball joint 14.1. The ball joint 14.1 preferably connects to a framework 14.3 of the vehicle 10 as shown in **Fig. 4d****.** The (first) drive units 11 of the two drive arrangements 11.2 are connected via a drive mechanism 11.1 comprising a splined shaft 11.3 with universal joints 11.4, a close-up view of which can be found in Fig. 4c. Additionally, two holonomic wheelsets 90 are shown in Fig. 4d. A motor 91 engages in a differential 91.1 connected to the holonomic wheelsets 90. The motor 91 and the holonomic wheels 90 are connected to the vehicle framework 14.3 in the middle between the two drive arrangements 11.2. **Fig. 4e** shows the crawler type vehicle 10 from a side-view perspective (from the second spatial direction). **Fig. 4f** shows the suspension elements 13, 13b of the crawler type vehicle 10 clamping the profile unit 1.1. The holonomic wheelsets 90 can be pressed against the profile units 1.1 from the bottom side (side facing the vehicle) with an additional return mechanism 90.1 not shown here.

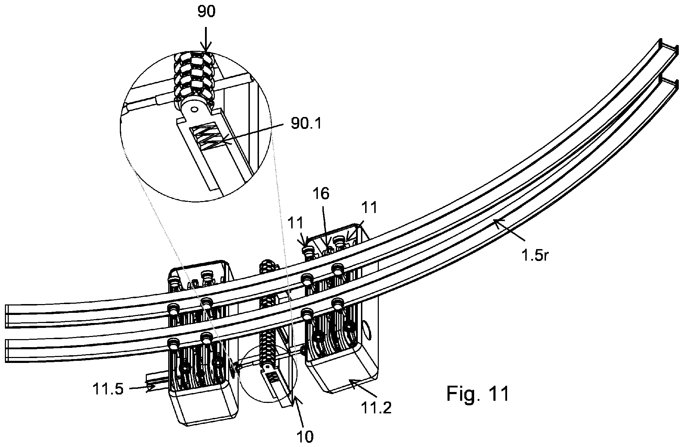

Referring now to the figures 5ff. to figures 11, it should be noted that a/the respective suspension arrangement may/can be shown in parts only. For further components of the suspension arrangement, especially as far as first and second structures are concerned, please also refer to the figures 12, 13, 14, 19ff.

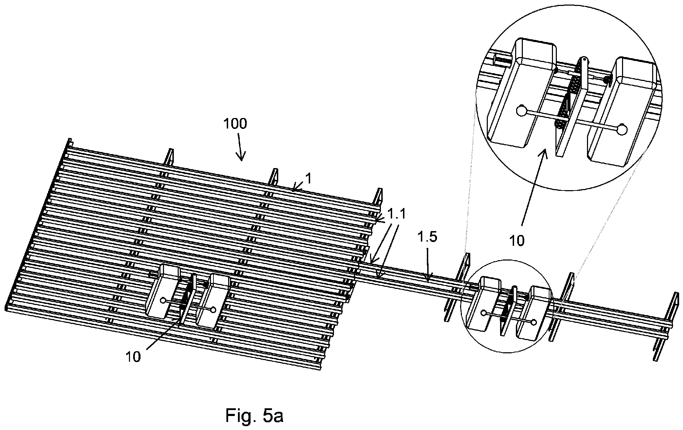

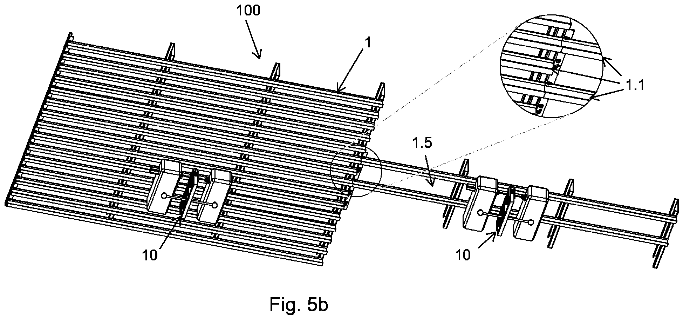

**Fig. 5a** shows a first suspension arrangement 100 according to an embodiment. The suspension arrangement 100 comprises a structure 1 with a crawler type vehicle 10 suspended in the structure 1. A first conveyor/connector rail 1.5 leads out of the structure 1 e.g., to a further structure 1'. The first conveyor/connector rail 1' comprises two directly adjacent profile units 1.1. However, as shown in **Fig. 5b****,** a second conveyor/connector rail 1.5 comprises two profile units 1.1 further spaced apart. As long as the vehicle is wide enough to be coupled into both of the at least two profile units of the conveyor/connector rail 1.5 when driving along the conveyor/connector rail 1.5, the profile unit can be spaced apart any integer multiple of the pitch of the structural regularity 1a. Using profile units 1.1 further spaced apart for the conveyor/connector rail 1.5 can increase the stability of the crawler type vehicle 10 when driving along the conveyor/connector rail 1.5, especially in curved sections.

**Fig. 6** shows a further suspension arrangement 100 comprising a structure 1 and a crawler type vehicle 10 of the kind described in Fig. 4d to Fig. 4f. A conveyor/connector rail 1.5 describing a curve 1.5r leads out of the structure 1. A crawler type vehicle 10 driving along the curve 1.5r is also shown in a close-up view. The crawler type vehicle 10 is able to follow the curved conveyor/connector rail 1.5 due to the (first) drive units 11 (resp. the drive arrangements 11.2) being able to deviate from their original parallel orientation because of the ball joint 14.1 connecting the at least two (first) drive units (here connecting the casings 14 of the drive arrangements 11.2 comprising multiple drive units 11a, 11b and possibly also a counter unit 16).

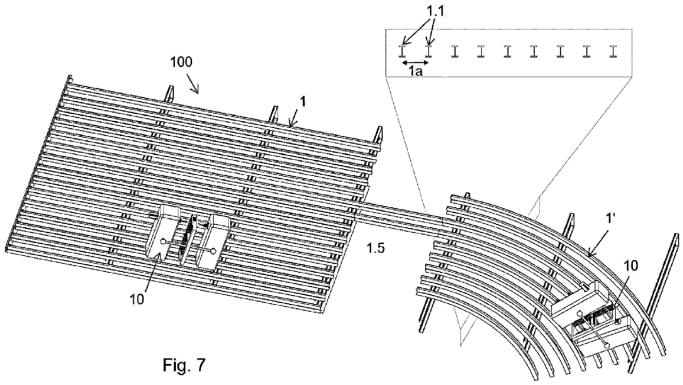

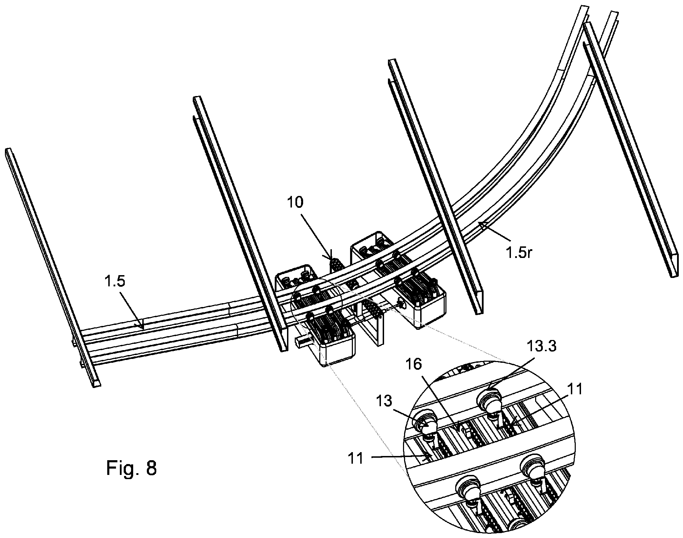

In **Fig. 7****,** a suspension arrangement 100 according to a further embodiment is shown. The suspension arrangement 100 comprises two structures 1, 1', wherein one of the structures 1' comprises curved profile units 1.1, a conveyor/connector rail 1.5 and two crawler type vehicles 10. The profile units 1.1 must follow a continuous curve, essentially without kinks. As indicated by the close-up view of a cross-section of the structure 1 comprising curved profile units 1.1, the profile units always have to comprise the structural regularity 1a in second spatial direction (y) (depending on orientation of the first spatial direction (x), essentially always orthogonal to the first spatial direction (x)) such that a coupling as shown in Fig. 3i is always ensured. Thus, the crawler type vehicle 10 is able to move (or to be moved) in the first spatial direction (x) (right or left along the curved profile units) irrespective of momentary motion in second spatial direction (y). For example, the orientation between the at least two drive units 11 (of the first kind) can change depending on the position of the vehicle in the structure 1' comprising the curved profile units 1.1, i.e., the farther out (with respect to the radius of the curve) the vehicle 10 is in the structure 1, the smaller is the angle between the orientations of the drive units (of the first kind). The details of a crawler type vehicle 10 following a curved conveyor/connector rail 1.5r is shown in **Fig. 8** from a perspective view from diagonally above. The suspension elements 13 engage in the same manner with the profile units 1.1 as in Fig. 7 in the structure comprising the curved profile units 1.1. The suspension elements 13 of the (first) drive units 11 couple to the profile units 1.1 via the elements of motion 13.3 (preferably first wheel and side wheel (see Fig. 3i), preferably from both sides of the profile unit 1.1 via mirror-inverted suspension elements 13 not shown here).

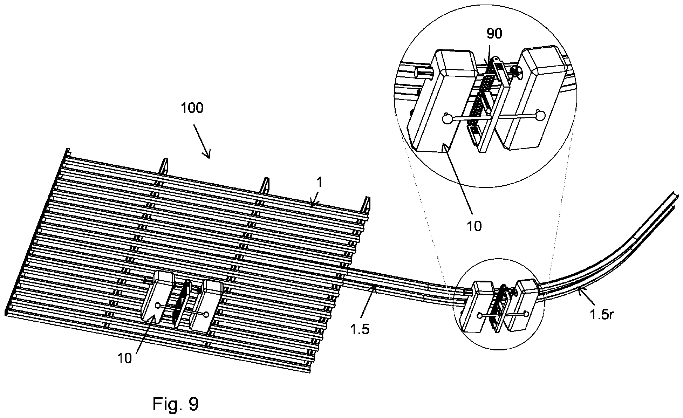

In **Fig. 9****,** a further suspension arrangement 100 is shown, wherein the suspension arrangement 100 comprises a structure 1, two crawler type vehicles 10 and a conveyor/connector rail 1.5 leading out of the structure 1. The conveyor/connector rail 1.5 (from the perspective of the (x, y)-plane described by the structure 1) leads upwards on a curve 1.5r out of the plane defined by the structure 1. In this configuration, it is important to ensure good (force fit) coupling between the crawler type vehicles 10 and the structure 1 or conveyor/connector rails 1.5. As indicated in the close-up view, the crawler type vehicle 10 comprises a return mechanism 90.1 connected to the vehicle framework 14.3 and the holonomic wheelsets 90. In **Fig. 11****,** the crawler type vehicle going upwards on the conveyor/connector rail 1.5 is shown in a perspective view from diagonally above. A close-up view further shows the return mechanism 90.1 applying a force onto the two holonomic wheelsets 90. The ball joints 14.1 of the crawler type vehicle 10 allow for the (first) drive units 11 to be tilted with respect to each other in any direction, i.e., not only left-right, but also up-down thus allowing the crawler type vehicle 10 to follow parallel profile units 1.1 going upwards/downwards, left/right as well as any combination thereof.

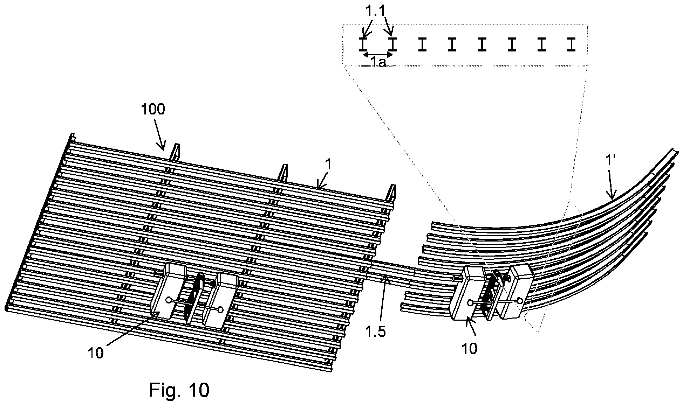

**Fig. 10** shows a further suspension arrangement 100 according to an embodiment. The suspension arrangement 100 comprises two structures 1, 1' connected via a conveyor/connector rail 1.5 and two crawler type vehicles 10. One of the structures 1' comprises curved profile units 1.1 describing a segment of a tube-like shape. As indicated in the cross-section here, the profile units 1.1 define the same structural regularity 1a in the second spatial direction (y) as before (see Fig. 3i). Thus, the crawler type vehicle 10 is able to move (or to be moved) in the first spatial direction (x) (upwards or downwards the curved profile units) irrespective of momentary motion in second spatial direction (

The described embodiments of the invention can be adapted to items to be stored with predefined upper and/or lower boundaries for their weight and/or size as well to handle stored items that can have different sizes, shapes and weights. The size and configuration of the ceiling arrangement and its components for lifting, transferring and lowering the items is partly predefined, especially by the dimension and strengths of profiles implemented in the structure. Other parts of the ceiling arrangement can be modified more easily, for example by providing vehicles with gripping units which are adapted to the items to be stored to the structure. Furthermore, the number of vehicles connected to the suspension structure can be modified.

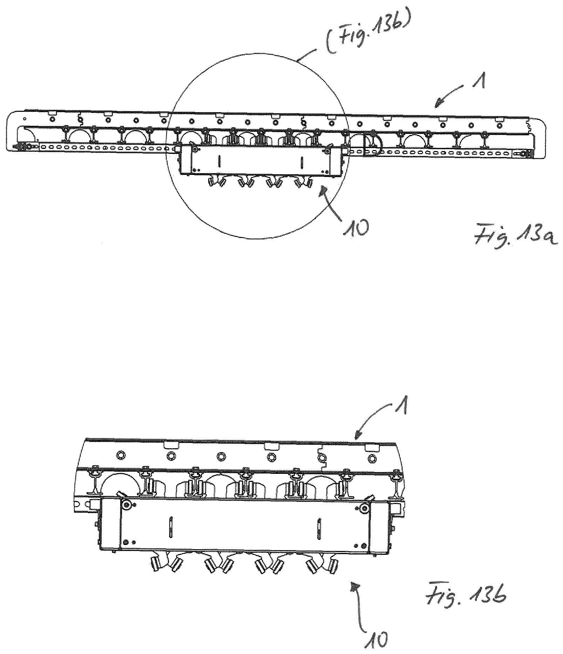

Figures 12, 13 show embodiments of structure of a suspension arrangement according to embodiments of the invention, e.g. for being located (i.a.) above stored items. For example, in such storing arrangement, items according to the requirements of a logistics systems provider can be handled. The items can range from individual goods objects, via bins as examples of smaller containers to standardized containers up to intermodal containers and even intermodal containers that comply with ISO standards or suitable future standards.

For example, such structure of the suspension arrangement can be implemented for an automated storage and retrieval system, wherein the suspension arrangement is located i.a. above at least a part of the storing arrangement, wherein at least one crawler type vehicle/unit can move above the at least one part of the storing arrangement and wherein a vehicle can be equipped with at least one gripping unit for lifting items from the storing arrangement to a position located above or besides the storing arrangement.

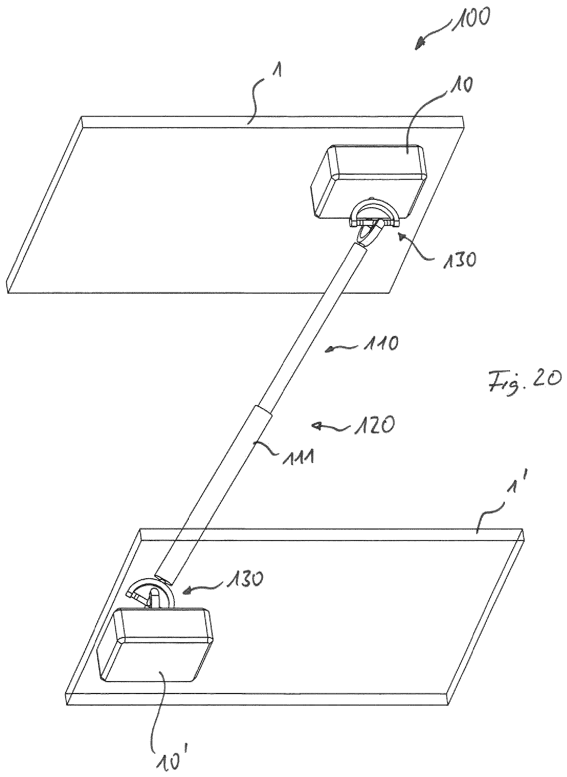

According to the embodiment shown in Fig. 12a, 12b one of the crawler type units 10 of the suspension arrangement 100 couples with a structure 1 which is arranged above the crawler type unit. In Fig. 12b, the middle part of the crawler type unit comprises a cavity 10a for attaching the linking means (not shown). Within the cavity, e.g. at a plate consisting the cavity's ground, attaching means (e.g. screw connections, not shown in detail) provide for attachment of the linking means. Alternatively, the linking means can engage with an exterior part (outer side) of the respective crawler type unit (Fig. 20). The crawler type unit comprises several drive units and two pairs of circumferential tracks, wherein the circumferential tracks of each pair are driven in counter-rotating manner. Fig. 12a illustrates first and second spatial directions x, y of the (first) structure.

It should be understood that the cavity's extension and arrangement preferably allows for quite great variations of the angle of the linking means extending between linked crawler type units, with respect to the respective first and/or second structure, irrespective of the kind of joint/coupling, and irrespective of the angle α (i.e., irrespective of the angle of planes defined by the first and second structures with respect to each other).

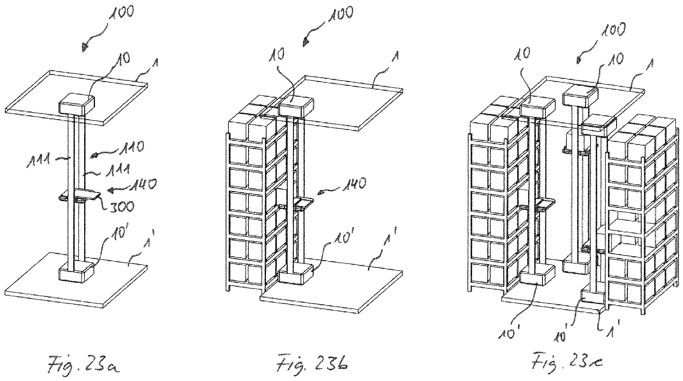

Alternatively, the linking means 110 can also engage with at least one (lateral) side of the respective crawler type unit (Fig. 23a).

According to the details shown in Fig. 13a, 13b the (respective) crawler type unit 10 can be designed such that its normal extension with respect to the side/front of the structure 1 is not considerably bigger than the structure's (normal) extension (corresponding to the vertical extension shown in Fig. 13a).

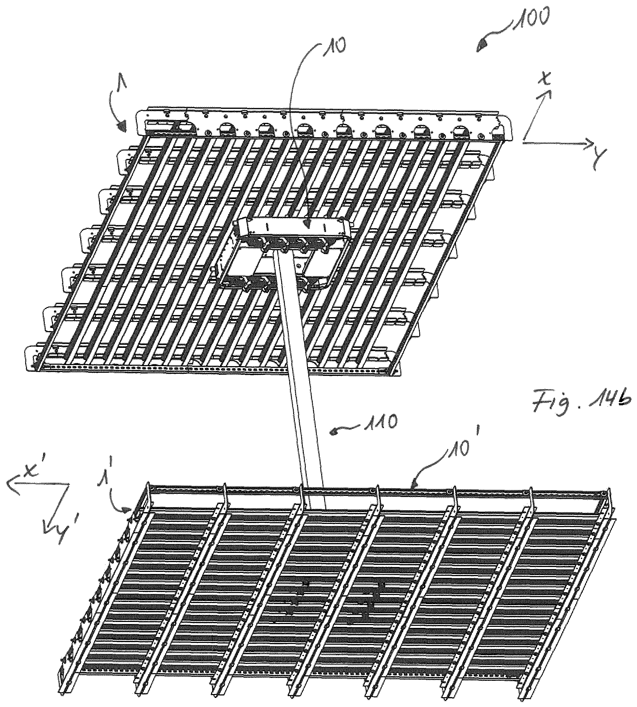

According to the embodiment shown in Fig. 14a, 14b, two crawler type units 10, 10' are linked to one another via inking means 110 comprising a bar 111.

According to the embodiment of a suspension arrangement 100 shown in Fig. 14a the first spatial direction of the first structure 1 corresponds to the first spatial direction of the second structure 1', i.e., the profile units 1.1 of the first structure extends in parallel with the profile units of the second structure. The angle α is ca. 180°.

According to the embodiment shown in Fig. 14b, the first spatial direction of the first structure is orthogonal to the first spatial direction of the second structure, i.e., wherein the first structure (resp. its profile units) extends orthogonally to the second structure. Irrespective of the alignment of the profile units, the structures can be arranged in parallel (or not).

Fig. 14b illustrates first and second spatial directions x, y and x', y' of the first and second structures 1, 1'.

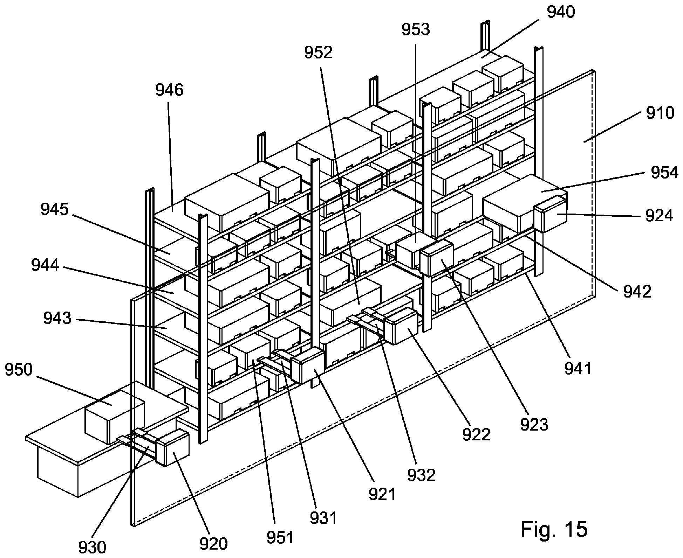

Fig. 15 shows an automated storage and retrieval system, wherein the storing arrangement contains a plurality of storage positions accessible from at least one lateral side of the storing arrangement, wherein in each of the storage positions at least one item can be stored and wherein the suspension arrangement is located i.a. (also) at a lateral part of the storing arrangement, wherein the respective crawler type unit/vehicle can move e.g. parallel to the at least one part of the storing arrangement and wherein a vehicle resp. a shelf removal and loading unit is equipped with at least one gripping unit, e.g. for lifting items from the storing arrangement to a position located e.g. on the side of the storing arrangement.

For the storing arrangement according to Figure 15, the suspension arrangement is also located at the side of the storing arrangement, which in this embodiment is designed shelf-like. Depending on the needs of transferring items along paths of motion, the skilled person can provide further structure(s) for coupling with crawler type units.

In this example of an automated storage and retrieval system for the storing of items in a storing arrangement 940, the suspension arrangement for e.g. lifting, transferring and lowering the items can also be arranged parallel to at least one side of the shelf, which is described as a transfer area for the items. The open side of the shelf is an example of a transfer area for the items.

The suspension arrangement 100, 910 preferably comprises several structures each extending in at least two spatial directions (x, y), wherein the respective structure comprises a plurality of profile units extending in a first spatial direction (x), wherein the structure (defines at least one structural regularity in a second spatial direction (y), and for each structure, the suspension arrangement preferably comprises
- at least one vehicle/unit (10), comprising a plurality of suspension elements configured for suspending the respective vehicle/unit and configured for coupling the vehicle to at least one of the structures by means of de-/coupling kinematics depending on a relative motion of the vehicle with respect to the structure in at least said second spatial direction (y), wherein the suspension elements comprise at least one element of motion configured for rolling on the profile units irrespective of momentary motion in said second spatial direction, enabling 2D-motion of the vehicles, wherein the at least one vehicle comprises at least one gripping unit, wherein the gripping unit is configured to connect to at least one item; and wherein the suspension arrangement is configured for active motion of the vehicle in said first spatial direction and/or said second spatial direction.

Each of the shelves 941, 942, 943, 944, 945 and 946 contains a plurality of flexibly selectable storage positions accessible from at least one lateral side of the storing arrangement 940, wherein in each of the storage positions at least one item can be stored and wherein the suspension arrangement is also located towards at least a lateral part of the storing arrangement 940, wherein the vehicles 920, 921, 922, 923, 924 can move parallel to the at least one part of the storing arrangement 940 and wherein the vehicles 920, 921, 922, 923, 924 are equipped with at least one gripping unit 930, 931, 932, 9 for retrieving items from the storing arrangement 940 to a position located on the side of the storing arrangement and/or for storing items from outside the storing arrangement 940 into the storing arrangement 940.

In Fig. 15, the structure(s) according to the present invention are shown in one preferred embdiment. Depending on the needs of especially logistic tasks, the skilled person can provide for arrangement and alignment of at least one additional structure.

The automated storage and retrieval system according to Fig. 15 contains a storing arrangement 940 wherein the suspension arrangement is also (i.a.) located at at least one lateral side of at least a part of the storing arrangement 940, wherein the crawler type vehicles 920, 921, 922, 923, 924, 925 and 929 can move nearby but separated from the at least one part of the storing arrangement 940 and wherein the vehicles 920, 921, 922, 923, 924, 925 and 929 each are equipped with at least one gripping unit 930, 931, 932, 933, 934 for moving items 950, 951, 952, 953, 954, 954, 955, 956 and 957 between the storing arrangement 940 and a handling position located independently from the storing arrangement 940.

It is especially useful to use at least two vehicles 920, 921, 922, 923, 924, which can operate independently, especially move independently.

Even when two or more vehicles 920, 921, 922, 923, 924 can operate independently, implementations are possible and useful in which at least two vehicles, respectively at least two vehicles selected from a plurality 920, 921, 922, 923, 924 of vehicles, can be coordinated, especially by coordinating the movements of their gripping unit units for coordinated lifting and/or moving of a preferably heavier item. In particular, this coordination or contral can be realized by a oute-planning tool.

A planar surface (side/front) formed and defined by the at least two spatial directions of the respective suspending structure is located in a distance from items 950, 951, 952, 953, 954, 954, 955, 956 to be lifted and/or transported by the gripping unit of at least one of the one of the vehicles 920, 921, 922, 923, 924.

It should be mentioned that the respective crawler type unit/vehicle can comprise means for providing for de-/coupling kinematics during a motion of the crawler type vehicle in said second spatial direction, especially with the crawler type vehicle being configured to be moved in said first spatial direction along the profile units irrespective of momentary motion in said second spatial direction enables independent movements of the vehicles with high acceleration, high speed and high deceleration.

The design of the gripping units 930, 931, 932, 933, 934, 935 and 939 is influenced by the size, shape, weight, surface and material properties of the items 950, 951, 952, 953, 954, 954, 955, 956 and 957 to be handled. Examples of gripping units which can be tailored to handle items are described in the current application text. It is especially useful to use gripping units 930, 931, 932, 933, 934, which are designed with extendable forks 930, 931, 932, 933, 934.

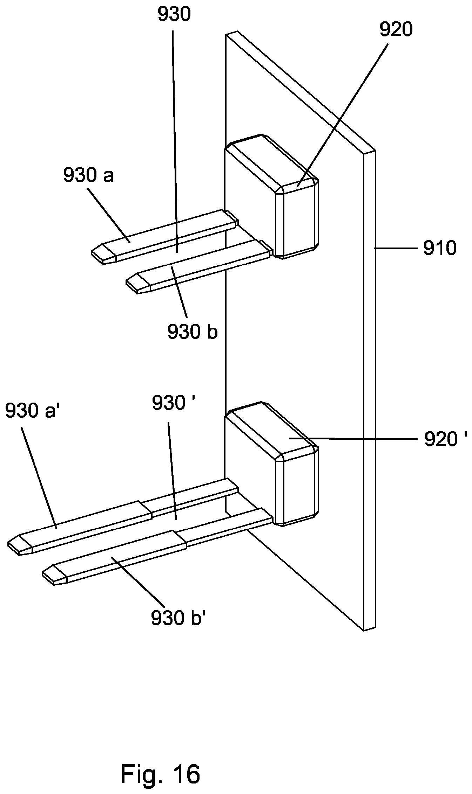

Fig. 16 shows an example of a vehicle 920, 920' wherein the vehicle 920, 920' comprises a gripping unit 930, 930' wherein the gripping unit 930, 930' is configured to connect to at least one item; wherein the vehicle 920, 920' can move alongside a suspension arrangement which is configured for active motion of the vehicle, e.g., the suspension arrangement 910, depicted in Fig. 15, in a first spatial direction and/or a second spatial direction.

The gripping unit 930, 930' is equipped with extendable forks 930a, 930a', 930b, 930b'.

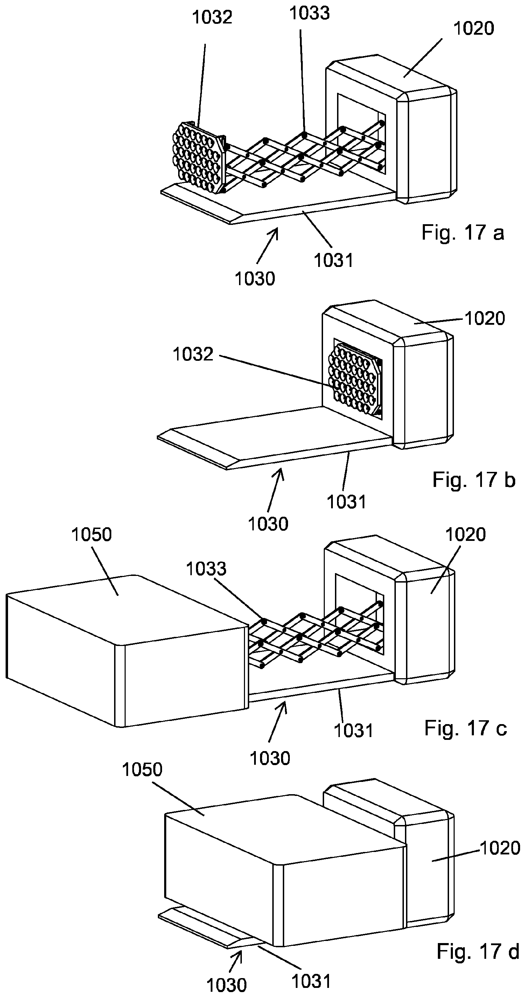

Figs. 17a, 17b, 17c, 17d show an example of a vehicle 1020 wherein the vehicle 1020 comprises a gripping unit 1030 wherein the gripping unit is configured to connect to at least one item 1050; wherein the vehicle 1020 can move alongside a suspension arrangement which is configured for active motion of the vehicle, e.g., the suspension arrangement 910, depicted in Fig. 15, in a first spatial direction and/or a second spatial direction.

The gripping unit 1030 is equipped with a base element, e.g. a flat plate 1031 an extendable robotic arm 1033 and a gripper, e.g. a suction gripper 1032.

Fig. 17a shows a process step, wherein the base element, e.g. a flat plate 1031 is set, the extendable robotic arm 1033 is extended and the gripper, e.g. a suction gripper 1032 can be activated to grip an item.

Fig. 17b shows a process step, wherein the base element, e.g. a flat plate 1031 is set, the extendable robotic arm 1033 is retracted and the gripper, e.g. a suction gripper 1032 is retracted.

Fig. 17c shows a process step, wherein the base element, e.g. a flat plate 1031 is set, the extendable robotic arm 1033 is extended and the gripper, e.g. a suction gripper 1032 is activated and grips an item 1050.

Fig. 17d shows a process step, wherein the base element, e.g. a flat plate 1031 is set, the extendable robotic arm 1033 is retracted and the gripper, e.g. a suction gripper 1032 is retracted to and has gripped the item 1050 an and wherein the retraction of the extendable robotic arm 1033 and the gripper 1032 has retracted the item 1050 from a storage position close to the vehicle 1020.

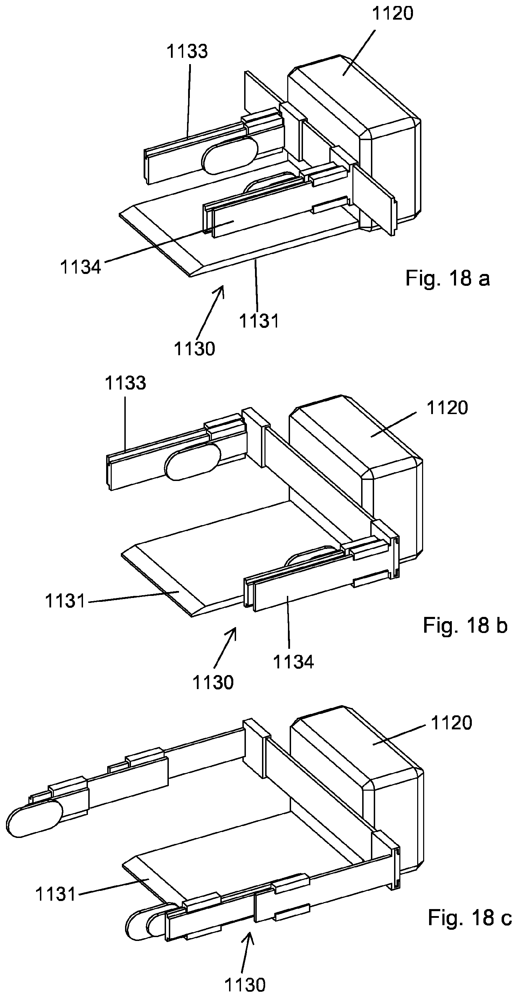

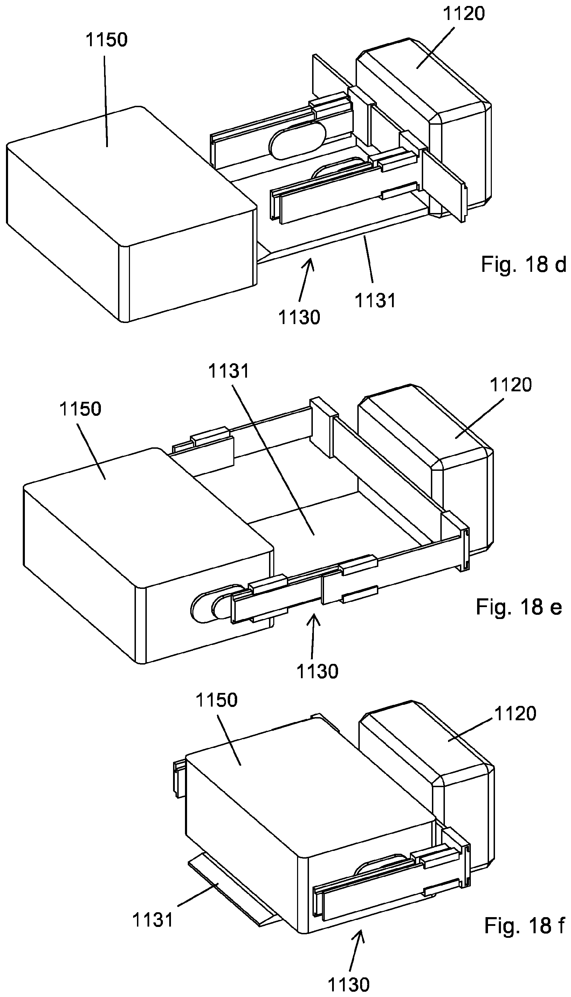

Figs. 18a, 18b, 18c, 18d, 18e, 18f show an example of a vehicle 1120 wherein the vehicle 1120 comprises a gripping unit 1130 wherein the gripping unit 1130 is configured to connect to at least one item 1150; wherein the vehicle 1120 can move alongside a suspension arrangement which is configured for active motion of the vehicle, e.g., the suspension arrangement 910, depicted in Fig. 15, in a first spatial direction and/or a second spatial direction.

The gripping unit 1130 is equipped with a base element, e.g. a flat plate 1131, two extendable robotic arms 1133, 1134 capable of acting as a gripper that can be activated to grip an item 1150.

Fig. 18a shows a process step, wherein the base element, e.g. a flat plate 1131 is set, the extendable robotic arms 1033 are retracted and moved close to each other.

Fig. 18b shows a process step, wherein the base element, e.g. a flat plate 1131 is set, the extendable robotic arms 1133, 1134 are retracted and moved away from each other.

Fig. 18c shows a process step, wherein the base element, e.g. a flat plate 1131 is set, the extendable robotic arms 1133, 1134 are extended/expanded and moved away from each other.

Fig. 18d shows a process step, wherein the base element, e.g. a flat plate 1131 is set, the extendable robotic arms 1033 are retracted and moved close to each other and where the vehicle 1120 is moved along the suspension arrangement so that the gripping unit 1130 has reached a position close to a storage position of the item 1150.

Fig. 18e shows a process step, wherein the base element, e.g. a flat plate 1131 is set, the extendable robotic arms 1133, 1134 are extended/expanded and moved away from each other and gripping/holding the item 1150.

Fig. 18f shows a process step, wherein the base element, e.g. a flat plate 1131 is set, the extendable robotic arms 1133, 1134 are retracted and moved away from each other, gripping/holding the item 1150 and wherein the retraction of the extendable robotic arms 1133, 1134 has retracted the item 1150 from a storage position close to the vehicle 1120.

With respect to the figures 17, 18, it should be mentioned that the respective vehicle can be arranged on a plate or platform which is attached or connected or coupled to the linking means 110, e.g. coupled to or supported (e.g. cardanically suspended) between two bars of the linking means.

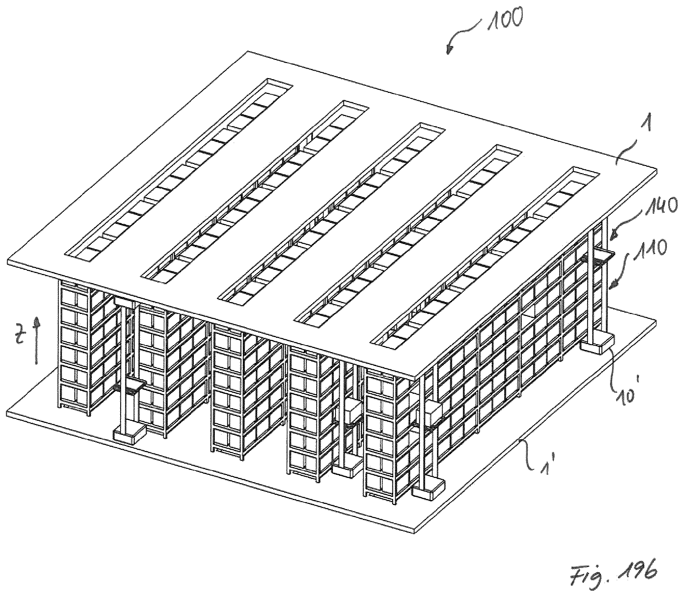

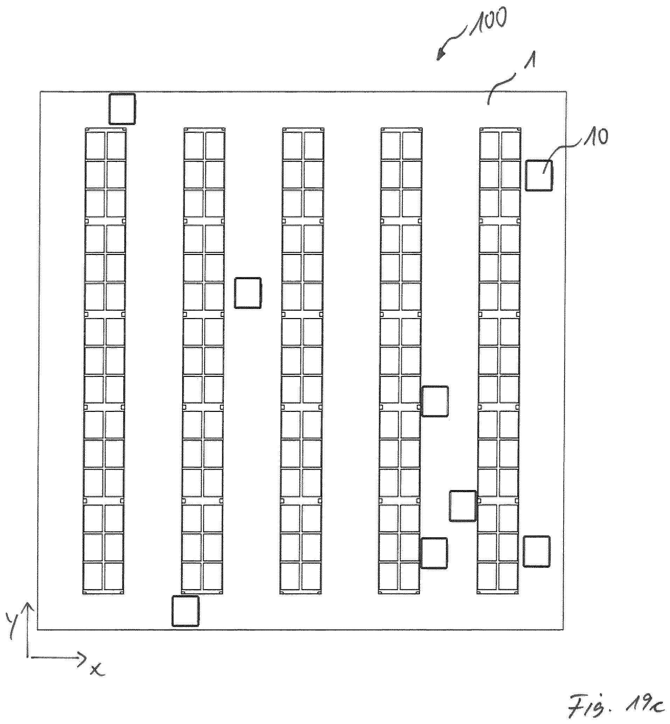

According to the embodiment shown in Fig. 19a, 19b, 19c the suspension arrangement 100 according to the invention is implemented for an automated storage and retrieval system comprising several rows of storage shelves with a corridor there between, wherein several pairs of linked crawler type units 10, 10' couple with a first structure 1 at the ceiling and with a second structure 1' at the bottom. According to Fig. 19b, the linking means 110 can comprise one or two bars 111, wherein a vehicle or shelf removal and loading unit is supported by a/the bar or arranged between the two bars, wherein each pair of crawler type units 10, 10' linked to one another may provide for suspension of one or at least two shelf removal and loading units (or vehicle/s), especially along the linking means 110 at different positions in height. According to Fig. 19b, the at least two structures 1, 1' of the suspension arrangement 100 can overlap and protrude the storage shelves in at least one spatial direction (x, y), which also facilitates route planning and (passing) manoeuvres also including paths of motion protruding from the corridors and side areas of the storage shelves.

According to the embodiment shown in Fig. 20, the suspension arrangement 100 comprises means comprising at least one mechanism 120, which is variable in length, especially a telescopic mechanism, wherein the linking means 110 is linked to at least one of the crawler type units 1, 1' by means of a linking joint or linking coupling 130, wherein the first and second structures 1, 1' extend in planes which are parallel to each other, at least approximately. Said mechanism 120, which is variable in length, can involve at least one translator guiding, such as a telescope, allowing for change of length of the linking means 110.

According to the embodiment shown in Fig. 21, the suspension arrangement 100 comprises first and second structures 1, 1' which extend in planes which are orthogonal to each other, at least approximately. The at least one mechanism 120, which is variable in length, allows for individual positioning of each crawler type unit 10, 10', even irrespective of the momentary position of the other crawler type unit of the pair of linked crawler type units. In other words: Optionally, only one of two linked crawler type units moves or is moved. The angle α is ca. 90°.

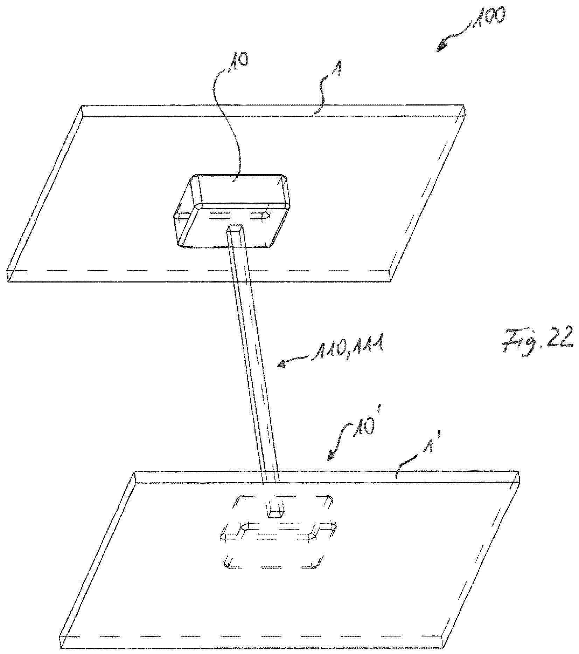

According to the embodiment shown in Fig. 22, the suspension arrangement 100 comprises linking means 110 comprising at least one bar 111, e.g. a rigid bar, wherein the first and second structures 1, 1' extend in planes which are parallel to each other, at least approximately. In particular, such an arrangement can be implemented in arrangements in which the crawler type units 10, 10' linked in pairs should move synchronously.

According to the embodiment shown in Fig. 23a-c, the suspension arrangement 100 comprises at least one shelf removal and loading unit 140 which is configured to handle items from two sides resp. in two directions. In particular, Fig. 23c depicts an implementation of the suspension arrangement 100 for an automated storage and retrieval system for storing items 300 in a/the storing arrangement comprising at least two rows of storage shelves with a corridor there between, wherein the corridor and the crawler type units 10, 10' and the shelf removal and loading unit(s) 140 are dimensioned and positioned such that the system allows for manoeuvres of two or three pairs of linked crawler type units 10, 10', each pair manoeuvring/handling at least one shelf removal and loading unit 140. It should be mentioned that such an arrangement can also enhance output in goods/cargo/items handling, although such wide corridors are not required according to the present invention, since the suspension arrangement 100 is suited for very flexible and variable manoeuvres. Preferably, the suspension arrangement 100 or the automated storage and retrieval system comprises a route-planning tool 200.

The present application shows embodiments of a joint concept of carrying out processing operations on items as far as possible automatically and preferably also without contact.

Even though the invention enables handling operations of conventional parcels, it is possible to additionally and/or instead handle items as parcels that cannot be handled as parcels in conventional logistics systems. As already disclosed in the introductory part, the present application further includes a handling of items with certain minimum dimensions, maximum dimensions, minimum weights and maximum weights as parcels, wherein the respective handling means are adapted to the reference quantities: Minimum dimensions, Maximum dimensions, Minimum weights and Maximum weights can be adapted. It is possible to process items of daily use such as consumables or foodstuffs as well as technical objects and equipment as parcels, whereby, as already entered in the introductory part, the parcels can be unpackaged objects, packaged objects and repackaged objects, whereby in the case of packaged and repackaged objects the parcel comprises the packaging or repackaging and the object packaged therein. Likewise, it is appropriate to process unpackaged objects, in particular commodity objects, according to the invention.

### Overall view of the logistics system and logistics processes

### Parcel identification characteristic

In the present application, parcel identification characteristics that are the same, in particular, and/or parcel identification characteristics that differ from other parcel identification characteristics may be used to identify a parcel.

As already illustrated, parcels in the sense of the present invention are always physical objects, in particular with constant physical properties, in particular weight and dimensions. It is thus possible, during the stay of the parcel in a logistics system according to the invention, to ensure that it is a specific parcel in each case. Different parcels usually differ in at least one physical property and can be distinguished from each other by measuring this physical property. These physical properties can therefore be used as parcel identification characteristics in an advantageous further embodiment of the invention.

The parcel identification characteristic may also be, for example, a parcel identification code that uniquely identifies a parcel. Such a parcel identification code is applied to a parcel, for example, before it is handed over to a logistics system or a unit of the logistics system, for example, one of the receiving units shown in this application, for example, the storage facilities shown, or the parcel identification code is applied to the parcel during a delivery to the logistics system or one of the processing operations within the logistics system.

Embodiments in which the parcel identification code is a physical code applied, for example, to the parcel, to an outer packaging of the parcel or to a storage unit for the parcel and/or a transport unit for the parcel and/or embodiments in which the parcel identification code is a digital code associated with the parcel and/or a digital twin of the parcel are also encompassed by the invention.

The control component of the logistics system can be designed in such a way that it controls as many or even all of the processing steps of the parcels as possible. However, it is also possible that the control component only controls individual process steps as described in this application.

Details of preferred embodiments of the control component and its interaction with the components of the logistics system can be carried out as it is for example described in the international patent application WO 2022106598.

Another parameter is the suitability for storage of objects in the storage facility. Such items are also referred to as parcels in this application, even though they are not parcels in the classical sense.

### Loading preparation

From the sorting process, the items, respectively the parcels intended for handover are automatically identified, discharged, separated and transported e.g. via a conveyor belt to a handover position.

It is appropriate to equip the gripping units with gripping unit arms Preferably, robot tools are attached to the gripping unit arms preferably gripping units systems, in particular one or more suction pads, also called vacuum gripping units. For example, the gripping unit systems known from DE 198 17 426 A1, in particular vacuum gripping unit systems, are adapted for this purpose. In particular, it is advantageous to use the measures described in this application for monitoring the gripping process, including a force sensor. This enables corrections to be made in the event of incorrect gripping of parcels, as forces outside a tolerance range can be measured and used to vary a control of the gripping process.

Furthermore, it is appropriate to equip the gripping unit arms with one or more sensor modules, in particular at least one force sensor, to measure the force on the parcel to be lifted, in particular the parcels. Furthermore, it is advantageous to use position sensors that are suitable for measuring a relative position or a distance between the parcel and the gripping unit or for determining the start and end points of a movement.

Preferably, a flexible gripping device is used to pick up the items/parcels, which is illustrated for example in the European patent EP2042277B1. This gripping device has a gripping unit with a multi-section frame, which is adapted for the present invention in such a way that better adaptation to variable dimensions (geometries) of the parcels is possible.

In order to facilitate stackability of the items, especially containers and/or removal of containers from a stack of several containers, it is advantageous to use within a stack of containers having the same dimensions and preferably outwardly sloping side surfaces.

It is of course possible to use containers/parcels with different dimensions within the storage facilities, advantageously using multiple stacks that have containers with dimensions that are the same within a stack and preferably different between different stacks.

It is advantageous to store the containers in a storage unit that takes their dimensions into account and to remove them from this storage unit as soon as a control command has been transmitted to carry out one or more of the logistical processing operations presented in this application.

Once the container is intended to be filled, it is appropriate to treat it as a parcel within the meaning of the present invention. In particular, this means that it is possible to process a parcel formed by the unfilled or filled container with one or more of the following processing operations:
- Acceptance as a parcel, for example as a posting, in particular by a storage facility or at a storage facility;
- transport of the parcel between the storage facility and a depositor and/or a recipient of the parcel; in particular by a handover unit,
- Transport of the parcel within the storage facility in particular between a handover gate and storage positions of a storage unit of the storage facility;
- Transport of the parcel from a storage facility to another storage facility;
- Transport of the parcel between the storage facility and a transfer facility;
- Transport of the parcel within the transfer facility;
- Sorting the parcel within the transfer facility 5130, 5336;
- Sorting of the parcel within the parcel sorting centre (parcel sorting centre 5301);
- Transport of the parcel between two distribution centres.

This concerns in particular processing operations of the parcel:
- Delivery to a logistics system;
- Transport to a storage facility;
- Transport to a storage position of a storage facility;
- Handover to a recipient.

According to the invention, a contactless logistics system is preferably provided in which the processing operations are carried out by machines so that the parcels and/or the objects contained in the parcels are protected from unwanted influences. Therefore, a complex outer packaging can be dispensed with.

It is appropriate to add protocol functionality to the control components.

The embodiments shown here are only examples of the present invention and must therefore not be understood as limiting. Alternative embodiments contemplated by the skilled person are equally encompassed by the scope of protection of the present invention.

### List of reference signs:

1, 1' structure (first or second)
1a structural regularity or raster defined by the respective (first or second) structure
1.1 profile unit, especially T- or I-profile resp. T- or I-rail
1.2 wheel tread
1.3 power rail
10, 10' crawler type unit
10a cavity with attaching means for attaching the linking means
11 drive unit (motor, actuator), especially chain drive
11.1 drive mechanism
11a first drive
11b further (second) drive
11c further (third) drive
12 circumferential track
12a first circumferential track, especially comprising a chain
12b second circumferential track
12p parallel section / linear section of the track
12r redirection section / curved section of the track
13 suspension element resp. chain element
13a first suspension element resp. chain element (first type)
13b further suspension element (second type, especially mirror-inverted)
13.1, 13.2 first pulley, second pulley
13.3 wheel
13.4 current collector resp. power-slider (conductive slider for energy transfer)
13.5 lever arm
13.6 protruding section / suspension arm
13.7 protruding axial section (guiding bolt or shaft)
14 casing
15 longitudinal connecting element, especially chain element
15a closed loop of interrelated suspension elements, especially chain
16 counter bearing
16.1 wheel, pulley
17 housing or chassis
18 gear unit
18a further gear unit
19 energy storage unit
20 de-/coupling kinematics
30 central control unit
31 decentral (individual) control unit
35 communicating unit (e.g. near filed, mobile network, LAN, LP-WAN, SigFox, NBloT)
36 transmitter (active or passive), especially for transmitting locating signals
40 sensor arrangement
41 sensing device
43 sensor
45 positioning system, e.g. based on near filed, mobile network, LAN, LP-WAN, SigFox, NBloT
50 hoist unit
51 traction mechanism, especially rope winch
53 transmission means, especially rope
60 external load, especially object or individual
61 package, e.g. including consumables, food, postal items
70 identification feature referring to vehicle, especially code (e.g. including a number)
71 identification feature referring to package, especially code (e.g. including a number)
80 digital twin referring to a respective vehicle
81 digital twin referring to a respective package
82 database
100 suspension arrangement
110 linking means
111 bar
120 mechanism which is variable in length, especially telescopic mechanism
130 linking joint or linking coupling
140 shelf removal and loading unit
200 route-planning tool
300 item
G13.1 first guiding point or axis (coupling the first track and the suspension element)
G13.2 second guiding point or axis (coupling the second track and the suspension element)
P10 energy charging point/position
P13 contacting/bearing point/area of the suspension element with the ceiling structure
P60 attachment point
XZa shape/contour of the first circumferential track
XZb shape/contour of the second circumferential track
y12a predefined first longitudinal positions
y12b predefined second longitudinal positions
y13 longitudinal extension of lever arm
x, x' first spatial direction: direction of longitudinal extension of profile units
y, y' second spatial direction: longitudinal direction resp. alignment of the circumferential tracks
z third spatial direction, especially vertical direction
**z, z'** normal vector with respect to side/front of the first or second structure
α angle between normal vectors **z, z'**
910 suspension arrangement
920, 920' vehicle
930, 931, 932, 933, 934 gripping units
930' gripping unit
930a, 930a', 930b, 930b' extendable forks
940 storing arrangement
941, 942, 943, 944, 945, 946 shelves
950, 951, 952, 953, 954, 954, 955, 956, 957 items
1020 vehicle
1030 gripping unit
1031 flat plate
1032 suction gripper
1033 robotic arm
1050 item
1120 vehicle
1130 gripping unit
1131 flat plate
1133, 1134 robotic arms
1150 item

## Claims

1. Suspension arrangement (100) comprising at least two crawler type units (10, 10') and at least two structures (1, 1'), each extending in at least two spatial directions (x, y, x', y'), wherein each structure (1, 1') respectively comprises a plurality of profile units (1.1) extending in a first spatial direction (x, x'),
wherein each structure (1, 1') defines at least one respective structural regularity (1a) in a second spatial direction (y, y');
and wherein the at least two crawler type units (10, 10') each contain a plurality of suspension elements (13, 13a, 13b) configured for suspending the respective crawler type unit (10, 10') and configured for coupling the respective crawler type unit (10, 10') to the respective structure (1, 1') by means of de-/coupling kinematics depending on a relative motion of the respective crawler type unit (10, 10') with respect to the structure (1, 1') in at least said second spatial direction (y, y'),
wherein the at least two crawler type units (10, 10') each contain at least two circumferential tracks (12, 12a, 12b), wherein the suspension elements (13, 13a, 13b) are attached to the circumferential tracks (12, 12a, 12b) at predefined longitudinal positions corresponding to the respective structural regularity (1a), wherein the circumferential tracks (12, 12a, 12b) respectively define a specific path of circumferential motion of the respective suspension elements (13, 13a, 13b), thereby providing for de-/coupling kinematics during a motion of the respective crawler type unit (10, 10') in said second spatial direction (y, y') with the respective crawler type unit (10, 10') being configured to move and/or to be moved in said first spatial direction (x, x') along the profile units (1.1) irrespective of momentary motion in said second spatial direction (y, y'),
wherein a/the side of the respective structure (1, 1') from which a crawler type unit (10, 10') couples with the structure defines a normal vector **(z, z'),** wherein an angle (α) between the at least two normal vectors of the at least two structures is between 0 and 180 degrees, wherein at least one first crawler type unit (10, 10') is coupled to a first structure (1, 1') and at least one second crawler type unit (10, 10') is coupled to a second structure (1, 1'), wherein the first and second crawler type units (10, 10') are linked to one another via at least one linking means (110).

2. Suspension arrangement (100) according to claim 1, wherein the linking means comprises at least one bar.

3. Suspension arrangement (100) according to claim 1 or 2, wherein the linking means is rigid or comprises at least one rigid linking unit or linking element.

4. Suspension arrangement (100) according to any of claims 1 to 3, wherein the linking means comprises at least one mechanism which is variable in length, especially a telescopic mechanism, e.g. at least one telescopic rod.

5. Suspension arrangement (100) according to any of claims 1 to 4, wherein the linking means is linked to at least one of the crawler type units by means of a linking joint or linking coupling respectively with at least one degree of freedom.

6. Suspension arrangement (100) according to any of claims 1 to 5, wherein the suspension arrangement comprises a shelf removal and loading unit (140) which is coupled with the linking means in a manner allowing for at least translational degree of freedom along the linking means.

7. Suspension arrangement (100) according to claim 6, wherein the shelf removal and loading unit is configured to handle items from two sides or in two directions.

8. Suspension arrangement (100) according to any of claims 1 to 7, wherein the first structure (1) is placed at a ceiling and the second structure (1') is placed at a bottom, especially in a warehouse, wherein a multitude of first and second crawler type units (10, 10') are coupled to the respective first and second structure (1, 1'), wherein pairs of first and second crawler type units are linked to one another via linking means, respectively.

9. Suspension arrangement (100) according to any of claims 1 to 8, wherein the first and second structures each extend vertically, at least approximately plumb-vertically.

10. Suspension arrangement (100) according to any of claims 1 to 9, wherein the first and second structures are supported relative to one other, especially by supporting means.

11. Suspension arrangement (100) according to any of claims 1 to 10, wherein the suspension arrangement comprises at least one adjusting mechanism configured for adjusting the relative distance and/or relative angular alignment/orientation of the first and second structures with respect to one another.

12. Automated storage and retrieval system for storing items in a storing arrangement, comprising a suspension arrangement according to one of the preceding claims, wherein the suspension arrangement comprises at least two pairs of first and second crawler type units respectively linked in pairs to one another via linking means.

13. Automated storage and retrieval system according to claim 12, wherein the automated storage and retrieval system is configured for storing items in a/the storing arrangement comprising at least two rows of storage shelves with a corridor there between, wherein the automated storage and retrieval system defines a first path of motion for a first of the pairs of crawler type units and defines a second path of motion for a second of the pairs of crawler type units, wherein the automated storage and retrieval system is configured for planning/defining passing manoeuvres of the first pair of crawler type units with respect to the second pair of crawler type units, or vice versa, along first and second paths of motion within the same corridor, and/or wherein the at least two structures of the suspension arrangement overlap and protrude the storage shelves in at least one spatial direction and the automated storage and retrieval system is configured for planning/defining a manoeuvre of at least one pair of linked crawler type units storage shelves from a/the corridor to the protruding portion of the at least two structures outside around the storage shelf/shelves.

14. Automated storage and retrieval system according to claim 12 or 13, wherein the suspension arrangement comprises at least one shelf removal and loading unit and is configured for transferring items, wherein the automated storage and retrieval system comprises a route-planning tool (200) which is configured to plan/define a path of motion for at least one pair of crawler type units, wherein the crawler type units (10, 10') coordinate their movement in the respective structure (1, 1') such that the linking means is brought before a respective storage position.

15. Computer implemented method of planning and defining at least one path of motion for at least one crawler type unit of two crawler type units of at least one pair of crawler type units linked to each other in pairs via linking means in a suspension arrangement (100) according to any of claims 1 to 11, wherein data of at least momentary positions and paths of motion of said at least two crawler type units linked in pairs and optionally of at least one further crawler type unit also coupled to the at least one structure is processed, wherein the planning and defining of said at least one path of motion is carried out such that the respective crawler type unit or pair of crawler type units move/s omnidirectionally along the at least one suspension structure (1, 1'), especially including paths of motion for passing maneuvers, with at least one of the crawler type units of the at least one pair of crawler type units either moving synchronously or individually.

16. Use of a suspension arrangement (100) according to any of claims 1 to 11 in a warehouse, wherein the suspension arrangement comprises at least one shelf removal and loading unit, wherein first structure (1) is placed at a ceiling and the second structure (1') is placed at a bottom, wherein the linking means preferably comprise two bars for each pair of crawler type units linked to one another.
